(19) Europäisches Patentamt
European Patent Office
Office européen des brevets

(11) EP 3 518 127 A2

(12) # EUROPEAN PATENT APPLICATION

(43) Date of publication:
**31.07.2019 Bulletin 2019/31**

(51) Int Cl.:
***G06F 17/50*** *(2006.01)*

(21) Application number: **19153635.8**

(22) Date of filing: **24.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2018 GB 201801159**
**11.09.2018 PCT/IB2018/056937**
**17.12.2018 GB 201820525**

(71) Applicant: **Romax Technology Limited**
**Nottingham, Nottinghamshire NG7 2TU (GB)**

(72) Inventors:
- **Schlaich, Andreas**
**NG7 2TU Nottinghamshire (GB)**
- **Park, Younsu**
**NG7 2TU Nottinghamshire (GB)**

(54) **DIGITAL CERTIFICATION**

(57) The present invention is a computer-implemented method for designing a drivetrain using computer aided engineering. The method comprises the steps of: a) receiving a selection of a certification test from a plurality of certification tests; b) receiving a parametric description of the drivetrain; c) receiving a selection of one or more analysis types appropriate for the selected certification test and the parametric description; d) providing a certification test model of the drivetrain based on the selected certification test, the parametric description, and the one or more analysis types; e) simulating performance of the drivetrain using the certification test model; and f) determining an indication of compliance of the drivetrain with the certification test based on the simulated performance.

Figure 1

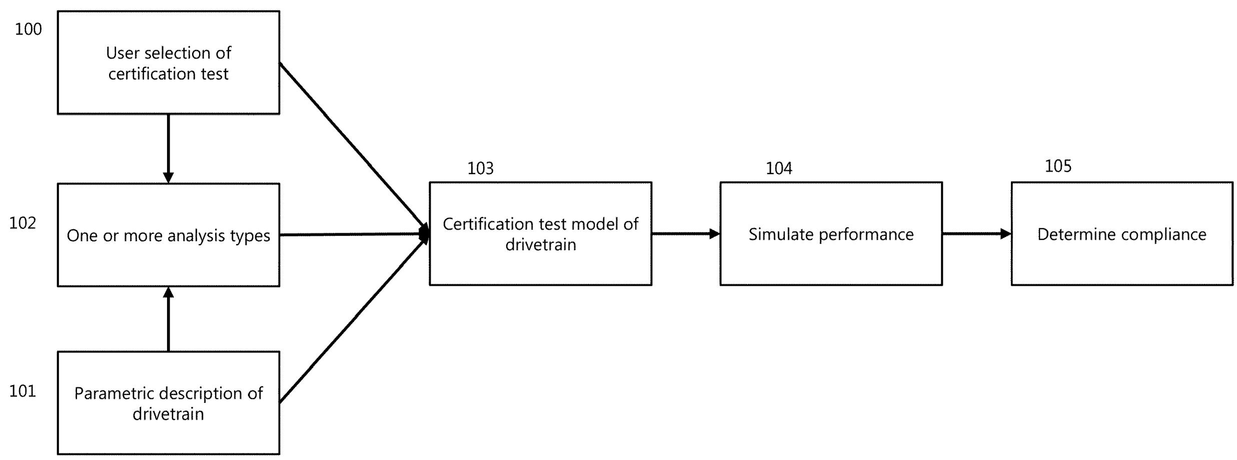


EP 3 518 127 A2

## Description

### Technical Field

The present invention relates to digital certification of drivetrains, and in particular to digital certification of aerospace and rotorcraft drivetrains.

### Background Art

CAD and CAE-based approaches are used in designing drivetrain components, and more sophisticated approaches have used these data to estimate performance of a drivetrain component.

Certification is a vital step in the design process for drivetrains in many different industries and sectors. In particular, the certification of airworthiness is one of the most important steps of the design process in aerospace industry. The current approach depends on the specific attributes being tested, but in general it relies on historical data supported by physical engine or rig testing which can be iterative and costly. This is often supported by manual calculations, and CAE tools and models if available. A number of different tests are performed in the certification process, and all have to be passed before a drivetrain receives a certificate of compliance. A technical problem facing the drivetrain design team is producing a design by computer-aided engineering which meets all the certification requirements. An associated problem is producing a drivetrain design that performs more efficiently than existing designs.

The present invention supports the certification process for drivetrains with software simulation that represent known requirements and tests. For aerospace applications, the requirements can include certification requirements for the European Aviation Safety Agency (EASA) and the Federal Aviation Administration (FAA), and other regulatory bodies.

GB2506532A discloses an approach in which key engineering parameters of the drivetrain are defined in a single parametric model, including form, function, operating conditions, and properties. These are defined in a parametric description that allows rapid redefinition of the design, allowing rapid design-analyse-redesign iterations according to the results of a multiplicity of physical simulations.

Summary of the Invention

The present invention is a computer-implemented method for designing a drivetrain using computer aided engineering. The method comprises the steps of: a) receiving a selection of a certification test from a plurality of certification tests; b) receiving a parametric description of the drivetrain; c) receiving a selection of one or more analysis types appropriate for the selected certification test and the parametric description; d) providing a certification test model of the drivetrain based on the selected certification test, the parametric description, and the one or more analysis types; e) simulating performance of the drivetrain using the certification test model; and f) determining an indication of compliance of the drivetrain with the certification test based on the simulated performance.

### Brief Description of the Drawings

The invention will now be disclosed with reference to the drawings, in which:

Figure 1 shows a process overview of the Digital Certification Simulation Toolset;

Figure 2a shows a general process overview of one single test;

Figure 2b shows an embodiment of the method of Figure 1;

Figure 3 shows a structure of an endurance test;

Figure 4 shows a structure of a flight manoeuvre test;

Figure 5 shows a structure of a bird ingestion test;

Figure 6 shows opportunities when using the bird impact feature for representing bird impact effects;

Figure 7a shows a method for calculating unbalance response accounting for non-linear bearing stiffness;

Figure 7b shows a design method based on the method of Figure 7a;

Figure 8a shows a method for calculating unbalance response using iterative quasi-static analysis;

Figure 8b shows a method for calculating unbalance response using time-domain analysis;

Figure 9 shows a structure of a vibration test;

Figure 10 shows a structure of a rotor integrity test; and

Figure 11 shows structure of a loss of lubrication test.

Disclosure of Invention

The invention is a computer-implemented method for digital certification of drivetrains with a range of certifications tests. The certification tests may include (but are not limited to) endurance test, flight manoeuvre test, bird ingestion test, vibration test, rotor integrity test, and loss of lubrication test. endurance test, flight manoeuvre effects test, bird ingestion test, vibration test, loss of lubrication test, over-torque test, over-speed test, exhaust gas over-temperature test, over-temperature test, and rotor integrity test.

The Digital Certification Simulation Toolset focuses specifically on requirements related to drivetrains. The requirements of each single test are translated into one or more types of analysis, which can be accessed from one basic user interface (UI). Analysis types include but are not limited to static, quasi-static, time-domain, and thermal approaches. Based on the types of analysis, the UI demands a specific set of input parameters. After completing the setup and running the simulation, the results are delivered in a standard report to support the certification process. These simulations will not replace the certification process itself and the required hardware tests, but it will support the user to gain more confidence before running them. In this way, a defined approach for simulating specific and relevant drivetrain aspects directly aligned to regulatory requirements, reduces the risk of costly re-tests, reduces the time to market and streamlines the reporting process during a very costly and time dependant phase of any development or modification process.

Certification requirements do not necessarily specify in detail how the requirement is to be achieved. For example, the engine or drivetrain may need to deal with given failure modes or environmental conditions (e.g. in aerospace applications, land safely if one engine is out of operation). The requirement does not specify details like what kind of model to build or what kind of simulation to run, in order to determine whether a given drivetrain design is likely to pass a hardware test and achieve certification. In order to use simulation to evaluate whether the drivetrain meets a requirement, not only does the model need to be built, but also the approach needs to be defined - what kind of model to build, what level of model detail, what CAE package(s) to use, what kind of analysis to perform, what assumptions should be made. To define and build models for a range of different certification requirements would require time, thought, and engineering expertise in a range of subject areas. It is likely that different certification requirements would require different CAE packages to be used, and therefore a number of experts in different aspects of engineering would be needed to build the models. Model-building effort would be duplicated, since different tests would need different levels of detail in different components of the different models. For example, bird ingestion tests may require modelling of turbine blades, whereas endurance tests require detailed modelling of the gearbox but not necessarily of the turbine blades with respect to drivetrain based interests.

This invention uses a parametric description of the drivetrain, which includes data relating to the form, function, properties, and operating conditions:

- Form can include data relating to geometry.
- Properties can include the material properties of the components, plus component specific properties such as the dynamic capacity of a bearing, the surface roughness of a gear tooth flank, the viscosity of a lubricant, the Goodman diagram of a shaft material, the resistivity of electric machine windings etc.
- Operating conditions can include principally the power, speed, torque of the rotating machinery, either as a time history or a residency histogram, but can also include temperature, humidity etc.
- Function can define the way in which the product, sub-systems and components perform their primary function - for example, the function of a roller bearing is to provide support to a shaft whilst allowing it to rotate; assemble a shaft and a bearing together and the combined function is to provide a rotating shaft to which loads can be applied; mount a gear on the shaft, mesh it with a similarly mounted gear and the combined function is to change speed and torque.

The parametric description defines the relevant parameters and allows mathematical models for different kinds of analysis and different tests to be built automatically.

Pre-defined tests, which capture the certification requirements and automatically assign required analysis types, can be run on the drivetrain model. The user only needs to assign application-specific conditions to the pre-defined tests, such as load case details including but not limited to rotation speed, torque, pressure, and temperature. In this way digital certification can be carried out quickly and easily by one engineer with no need for specialist knowledge or expertise in using many different software packages. This saves the user time and effort in building models and setting up load cases manually.

Physical certification tests may still be required in order to demonstrate that the drivetrain meets the certification requirements. With digital certification, the tests are run in simulation first, and if any tests fail, the drivetrain design can then be modified and re-tested until all of the tests pass and all certification requirements are satisfied. Because all of the mathematical models used for the different certification tests are built automatically using the parametric description of the drivetrain, any change in the parametric description (for example, a modification because one test failed) can be directly and automatically applied to the models and analyses for all certification tests. Thus, the need for physical testing is reduced; the actual certification hardware tests only need to be run once and will pass first time. This is advantageous because it saves time and money on physical testing. A failure in a certification test means that the drivetrain needs to be redesigned and a new prototype build for testing, incurring additional costs and significantly delaying product development timelines.

The digital certification framework can be expanded in the future to include new types of test, for example if the certification requirements change, or if there is an advance in CAE capability that enables a better simulation which produces more accurate results.

Basic Structure of Digital Certification Simulation Toolset

Figure 1 is a schematic illustrating the method of the invention. In step 100, the user selects a certification test from a range of available tests. A parametric description of the drivetrain is provided in step 101. Using the selected test and the parametric description, one or more analysis types 102 is selected. The analysis types can be selected by the user, or selected automatically. The next stage in step 103 is to build a mathematical model of the drivetrain appropriate for the selected certification test, based on the parametric description and the required analysis type(s). In step 104 the performance of the drivetrain is simulated, using the certification test model. The simulation result is used in step 105 to determine whether the drivetrain has passed the certification test.

The parametric description 101 defines the relevant parameters and allows mathematical models 103 for different kinds of analysis 102 and different tests to be built automatically. Each analysis type 102 knows what information is required. For example, structural analysis requires the mass and stiffness matrices of the whole drivetrain system; vibration analysis requires details of any applied excitations; stress analysis requires details of small features that may act as stress raisers. Therefore the certification test model 103 can be built using only as much detail as is needed from the parametric description 101. This has the advantage that the computational effort required to simulate performance in step 104 is the minimum possible, since the model 103 does not contain extraneous data.

Figures 2a and 2b illustrate two embodiments of the invention. References in the 200 series will be used, and the labels with common numbers refer to the same steps as described in Figure 1. In Figure 2a, a certification test is selected in step 200. In this embodiment the analysis types 202 are pre-defined based on the certification standards 209, rather than specified by the user. The advantage of pre-defined tests is that they capture the certification requirements 209 and automatically assign required analysis types in step 202. Digital certification can therefore be carried out quickly and easily by one engineer, with no need for specialist knowledge or expertise in using many different software packages for different analyses. This saves the user time and effort in building models and setting up load cases manually.

The drivetrain model 211 is based on the parametric description 101, and is used as the basis for building certification test models 103 for each specific certification test and for each specific analysis to be run. In the embodiment of Figure 2a, certification test models for each of the analysis types are built by selecting data from the parametric description in step 210a, 210b, 210c. The step 204 of simulating the drivetrain performance is split into 204a, 204b, 204c, each simulating the performance for one of the analysis types defined in step 202, and each using one of the certification test models. The results 205a, 205b, 205c are the output of the simulations 204a, 204b, 204c for different analysis types. These results 205 determine whether the drivetrain is compliant with the certification test.

Optionally, in a step 206 the complexity of the analysis can be selected, either manually by a user, or automatically depending on the drivetrain model and analysis type. Input parameters 213 are part of the drivetrain's parametric description. The input parameters 213 can also be pre-defined for a selected certification test. In step 207, the user can decide the format of the operating conditions for the certification test: the operating conditions can be in the form of load cases, a histogram calculated using the Torque Histogram Method, or time-domain data. If load cases are selected, these are an input into the basic drivetrain model 211 at step 208. The load cases 208 can also be pre-defined for a selected certification test.

In Figure 2b, multiple certification tests are selected in step 200. Analysis types 202a and 202b are chosen for Test 1, and running the simulation on the certification test model produces results 205, which determine whether the drivetrain is compliant with the certification test. The certification tests selected in step 200 can be run independently, or when the certification requirements allow, more than one test can be run together. The advantage of automatically building the different certification test models from the same base drivetrain model 211, incorporating the same parametric description of the drivetrain, is that any change in parameters (for example, a modification because one test failed) can be directly and automatically applied to the models and analyses for all certification tests. This has the advantage of reducing the need for physical testing; the actual certification hardware tests only need to be run once and will pass first time.

The input parameters 213 (part of the drivetrain's parametric description) and the format 207 of the operating conditions are applied here to each of the selected certification tests. The results 205 of each test are summarised into summary results 212, which determine whether the drivetrain is compliant with all of the selected certification tests.

It will be appreciated that some of the steps described in relation to Figures 1, 2a, and 2b can be performed automatically. The steps that can be performed automatically include:

selecting appropriate input parameters 213 - the input parameters can be predefined for a given certification test

selecting the analysis types 102 - the analysis types can be predefined for a given certification test

defining load cases 208 - the load cases can be predefined for a given certification test

building the certification test model 103 - the model can be built automatically based on the selected input parameters 213, the load cases 208, and the analysis type 102

simulating performance 104 - this is the step of running the selected analysis 202 on the certification test model 103

determining compliance 105 - this step can comprise comparing the simulation result with a threshold value and determining whether the certification test result is a pass

selecting complexity of analysis 206 - the complexity can be predefined for a given test, or determined automatically e.g. by the required frequency for a vibration analysis

summarising results 210 - the results 205 of individual analyses or certification tests can be automatically summarised in one report and presented to the user.

In summary, before using the Digital Certification Simulation Toolset, a drivetrain model must be created. This can be done by using one or more CAE software packages. After that, the Digital Certification Simulation Toolset can be started. The first step is for the user to select the regulatory authority (for aerospace, FAA, EASA, etc.), the type of application (for aerospace, aircraft, rotorcraft, etc.), and in some cases its category based on weight and seats. Following these selections, a list of all certification tests that are relevant to the drivetrain will be presented to the user. Based on this list of relevant tests, the user is able to select one or more certification tests. In general, all tests can be run separately, but if the certification regulations allow it, they can also be combined. This means that the test results are combined, which affects especially the accumulating results like life and damage.

When one of the provided tests in the list is chosen, the next step is for the required input parameters to be specified. These parameters depend on the chosen test, and the values can either be specified by the user or predefined depending on the test. The test can also predefine the required one or more types of analysis based on the related requirements of the regulations and certification specifications. In most tests the required types of analysis are automatically set, but in some special cases, there is the option to extend the predefined basic analysis by some advanced analysis. This shows the advantage that analysis with high computational effort can be left out if not especially desired.

As an alternative to manually defining the load cases, the tests that require a load case definition can use the Torque-Histogram-Method. This method takes as an input the torque range of the time history of cyclical loading and unloading, and divides the torques into a number of torque bins. These bins can be equal sized bins or non-uniform, for example, smaller bins may be desired at larger torques. The total number of loading cycles and the contribution of the torque to the appropriate bin is incremented for each data point assigned to a bin. The values of other parameters (for example, temperature) per time step will be averaged. These bins can then be used as a set of load cases. The advantage of this method is that parameters such as temperatures, or load case dependent attributes such as forces and moments other than the torque, are not estimated but simulated input parameters. The method can also be extended to create multi-dimensional bins for multiple parameters, e.g. divide the torque bins further into different temperatures, etc. The Torque-Histogram method can be implemented in a different software package, or as part of the same software package. The time history can be calculated from a drivetrain model or even a more extended model, where the drivetrain is connected to its full environment. If a separate software package is used, the results can be imported in the form of a time history file containing all required information as listed above for each time step, or simply as a list of the torque bins together with time duration or number of cycles for each one, and other parameters as appropriate.

Once all parameters are set, the selected certification test can be run. The data from the parametric description is automatically selected appropriate to the complexity of analysis. The results are presented in a standard way and differ depending on the chosen test. Apart from separate results of each single test or combined tests, it is also possible to get a complete summary of all tests that have been run.

Some of the certification tests are required to calculate deflections caused by forces that occur in the drivetrain. Such deflections can be considered as being caused by structural forces. In some examples, the deflections can be calculated by i) quasi-static analysis, or ii) dynamic analysis of the drivetrain system. The drivetrain system can be considered as all of the nodes in the complete drivetrain. These methods are described in more detail below.

Quasi-static analysis resolves the applied forces on all components of the drivetrain to calculate deflections, taking into account that some component stiffnesses may be load-dependent. Therefore the method needs to iterate over the forces, deflections, and stiffnesses until convergence is achieved. The method assumes that forces and displacements are not time-varying, other than rotating at a constant speed as specified in operating conditions that are provided as part of the parametric description.

Dynamic analysis, in contrast to quasi-static analysis, permits the deflections and applied forces to vary with time. This allows time-varying excitations to be included in the analysis. Time-varying excitations can include transmission error, engine torque ripple, electric machine torque ripple, and electric machine radial forces. In dynamic analysis the deflections can be determined by solving the drivetrain system's equation of motion, represented in a matrix formulation in Equation 1:

$$M\,X'' + C\,X' + K\,X = F \qquad \text{(Equation 1)}$$

where:

M is the drivetrain system mass matrix,

C is the drivetrain system damping matrix,

K is the drivetrain system stiffness matrix,

F is the applied force, and

the vector X defines the positions and rotations of every node in the structural model in six degrees of freedom. The notation X' means the derivative of X with respect to time.

The structural model can be solved either quasi-statically or dynamically, as described above. Both of these methods calculate the deflections in six degrees-of-freedom for every node in the drivetrain structural model.

The method can solve the matrix equation for X to determine the new positions and rotations of the nodes in the structural model. Deflections can be considered as the difference between new position/rotation values and starting position/rotation values of the nodes.

Dynamic and quasi-static analysis can also be further coupled with efficiency and thermal analysis. This will allow the user to select an appropriate balance between accuracy of results and required computational effort: at a concept design stage, it may be desirable to investigate many potential design candidates quickly with a lower fidelity simulation, whereas for a certification test on a more mature final design, greater accuracy may be required.

Efficiency analysis and thermal analysis can be applied to any of the certification tests, in combination with either time-domain dynamic analysis or quasi-static analysis.

The thermal model of the drivetrain can be a discrete thermal model or a continuous thermal model. Discrete thermal models can include lumped parameter thermal network models, and meshed finite element thermal models.

A discretised lumped parameter thermal network model of the drivetrain may contain thermal inertias or capacitances connected by thermal links, with heat sources providing an input of heat flux. Thermal links can include heat transfer due to conduction, convention, and radiation. The properties of these capacitances and conductances, and their connections, can be determined from the parametric description of the drivetrain and its components.

In some embodiments, the method can automatically process the parametric description to identify where there are power losses in the drivetrain in order to build the thermal model. For instance, the method can determine the power loss of one or more components in the drivetrain (optionally for specific operating conditions), and then determine whether or not the component should be modelled as a heat source based on the determined power loss value. For instance, if the power loss value is greater than a power-loss-threshold, then the component can be modelled as a heat source. The heat source can be included at a location in the model that corresponds to the location of the component that was determined to have the associated power losses. In this way, the method can recognise that heat will be generated at locations in the drivetrain where there are power losses. Locations of power losses can include places where there is friction between contacting surfaces (gears and bearings), current passing through wiring (e.g. electric machine stators and power electronics), drag losses at seals, or movement of fluid causing drag losses (churning or windage).

In some examples, the thermal model is a lumped parameter thermal network model. The method can discretise such a model in several different ways, including:

a) Creating a lumped parameter thermal network, based on the parametric description, with one thermal node per component. However, this approach may not check whether the thermal model is suitable for the thermal analysis being carried out. The heat flux to and from a thermal node associated with a component can depend on the component's shape, size, material, heat capacity, and temperature compared to surrounding components. It may be that a model with one thermal node per component is unreasonably detailed, with a consequential penalty in analysis time, or that it is insufficiently detailed, meaning that the results may be insufficiently accurate. It is possible that the model may include details in one area that are excessive whilst missing necessary fidelity in other areas, leading to both slow computation and inaccuracy.

b) An alternative to the one-node-per-component discretisation of a lumped parameter thermal network described in a) above is manual discretisation, in which the user specifies the number of thermal nodes required for each component, or which components to lump together into a single thermal node. The thermal model can be based on both user input and the parametric description. However, an engineer may need to spend time building and refining the model, and checking to see how the analysis results vary as the level of discretisation varies, for such manual discretisation. The engineer can aim to seek reassurance that the model is suitably accurate without being excessively detailed, but the process can be time-consuming and could end up being carried out by the most highly qualified and hence expensive engineer within the organisation, with resulting adverse impacts on project cost and timing.

c) Advantageously, an analytical formulation can be used to create a lumped parameter thermal network that is optimised for speed and accuracy of analysis. The method can perform automatic discretisation of the model so as to retain thermal nodes at the points in the model that are appropriate for accurately describing the thermal behaviour of the drivetrain. As discussed above, the method can include power losses in the drivetrain in the lumped parameter thermal network as heat sources. The method can calculate values of thermal conductance and thermal capacitance for each component, using data from the parametric description of the drivetrain. From these values, the method can determine a ratio of thermal conductance to thermal capacitance for a component. The method can make this determination from information provided in the parametric description such as material properties, and size and shape of the component. Alternatively, the ratio of thermal conductance to thermal capacitance may be directly available from the parametric description. The method can then compare the ratio of thermal conductance to thermal capacitance with one or more thermal-conductance-to-thermal-capacitance-ratio-threshold values. The method can advantageously model one or more of the drivetrain components as either a thermal conductance or a thermal node, depending on the ratio of thermal conductance to thermal capacitance. For instance, the method can model drivetrain components with a ratio that is higher than a thermal-conductance-to-thermal-capacitance-ratio-threshold value as thermal conductances. The method can model drivetrain components with a ratio that is lower than a thermal-conductance-to-thermal-capacitance-ratio-threshold value as thermal nodes. Thus the lumped parameter thermal network can be built and discretized automatically, without the need for manual input or modelling decisions from the user.

For example, consider a spacer separating two bearings mounted on the same shaft. The spacer is a thin-walled cylinder with very small mass. Its shape and position means that it conducts heat between the two bearings. Approach c) would employ the method of automatically determining whether to treat a component as a thermal mass or a thermal conductance based on the ratio of thermal conductance to thermal capacitance, and would therefore classify the spacer as a thermal conductance rather than a thermal node. This is appropriate because the thermal mass is negligible, but the effect of conducting heat between the bearings is significant, particularly if their temperature difference is high. Method a) would have classified the spacer as a thermal node, and method b) would have required an engineer to manually decide the most appropriate way to model that component. The lumped parameter thermal model can be calculated for the whole drivetrain.

Time savings and error avoidance can be achieved by the automatic set up of the thermal inputs at components that have associated power losses. Also, as will be discussed below, heat flux values can be automatically determined based on the operating conditions of the components.

Heat transfer can occur by different mechanisms including conduction, convection, and radiation. Conduction is straightforward, since thermal conductivity of solid metal components can be straightforward to calculate. For example, the method can calculate conduction heat transfer through bearings based on static analysis of the roller bearing and the contact area generated by the load dependent stiffness. Usually, heat transfer by radiation is small compared to conduction and convection. Heat transfer by convection, however, can be more difficult to determine. For example, the heat at a gear mesh is generated within the oil film and the heat transfer to the metal of the gear is determined by the convection Heat Transfer Coefficient (HTC) between the gear and the oil. These HTCs are difficult to predict with certainty. A hot metal surface sitting in still air will lose heat at a much slower rate than one experiencing gentle, laminar air flow over its surface, and even more so compared to one with rapid, turbulent air flow.

The thermal model can include values for HTCs associated with the drivetrain. These HTCs can relate to heat transfer between the internal drivetrain components and the lubricant, between the lubricant and the housing, and / or between the housing and the environment.

The values of HTCs can be determined in several ways, including:

i) The method can use default values for the HTCs.

ii) A user can provide input representative of HTC values to be used, which can involve the modifying of any default values.

iii) The method can automatically calculate the HTCs. The method can calculate convection HTCs using a Computation Fluid Dynamics (CFD) model, or using a simple lumped parameter thermal network model (described later in this document).

A thermal distribution is calculated based on the thermal model. For instance, the method can calculate power losses for one or more of the components, based on calculated efficiency values, to determine an amount of heat that is generated at that component. The method can associate this amount of heat with the corresponding heat source in the thermal model. In order to determine the temperature distribution, heat flux in the drivetrain may be calculated. In this way, the temperature distribution can comprise a temperature value associated with each of the modes in the thermal model. In some examples, the temperature distribution can include a plurality of temperature values for a single component.

Heat flux into the lumped parameter thermal network occurs wherever there is a power loss associated with any component. The values of these heat fluxes can be determined in several ways, including:

i) The values of these heat fluxes can be defined by the user, and these can be combined with the thermal model to perform thermal analysis and calculate the temperature distribution in the drivetrain.

ii) The method can automatically determine values of the heat fluxes. For instance, when building the thermal model, the method may have performed known efficiency/power loss calculations for one or more components in the drivetrain to determine efficiency/power loss values. Then, when building the thermal, the method can determine the values of associated heat fluxes based on the efficiency/power loss values as well as the parametric description.

The method can run thermal analyses using a lumped parameter thermal network model, leading to values of the temperature being obtained at discrete thermal nodes. In other words, the term "lumped" is equivalent to the term "discretised". If a thermal profile throughout the full structure is to be calculated, then a further thermal calculation can carried out based on the 3D structure of the drivetrain, based on the thermal properties of the drivetrain components. Thus, a smooth temperature profile can be obtained throughout all the mechanical components in the drivetrain.

The processing can include application of Equation 2 below, which describes how to calculate heat flux in a thermal network model:

$$Q' = dT / R \qquad \text{(Equation 2)}$$

where Q' is the heat flux (derivative of heat Q with respect to time), dT is the temperature difference, and R is the thermal resistance.

Thermal resistance R can be calculated in different ways for different components and heat transfer methods. For example, for convection heat transfer between a component and a fluid, R is given by Equation 3a:

$$R = 1 / h A \qquad \text{(Equation 3a)}$$

where h is the heat transfer coefficient and A is the contacting surface area. For conduction in solid components, Equation 3b describes how to calculate the thermal resistance:

$$R = L / k A \qquad \text{(Equation 3b)}$$

where L is the characteristic length, k is thermal conductivity, and A is the surface area. The parameter k is a material property, and the parameters A and L are geometric, all defined within the parametric description of the drivetrain. For conduction in bearings, the thermal resistance can be calculated using Equation 3c:

$$R = \ln (r0 / r1) / 2 \pi b k \qquad \text{(Equation 3c)}$$

where r0 and r1 are the inner and outer radii of the bearing, b is the face width, and k is the thermal conductivity.

The method can use Equations 2 and 3 to calculate the heat fluxes between all nodes in the thermal model, and hence the temperature distribution within the drivetrain.

Further details of how to set up and run a thermal network is provided in the thesis titled "Thermal modelling of an FZG test gearbox" by CARLOS PRAKASH DEL VALLE of KTH Industrial Engineering and Management Machine Design - in particular section 3.2 of this document.

The method of building a thermal model and calculating a thermal distribution can have several advantages:

1) The thermal model can encompass the entire drivetrain, including all components and subassemblies. This is an advantage over application-specific CAE tools, which consider only a specific component or sub-assembly in isolation.
2) As will be discussed below, the temperature distribution that is calculated based on the thermal model can be used to achieve a more accurate calculation of drivetrain deflections by including the effect of thermal expansion. Accurate deflections can be used to more accurately calculate efficiency, durability, and other performance metrics. This is an advantage over application-specific CAE tools, which calculate a temperature distribution but do not use it to improve the calculation of deflections.
3) A lumped-parameter thermal network model can be created automatically and optimised for speed and accuracy, especially as described in approach c) above.

The method can determine a deflection of one or more components of the drivetrain caused by the thermal distribution. In some examples, this can be considered as applying the temperature distribution to a structural model of the drivetrain. Most of the drivetrain components can be modelled as FE meshed components in the structural model, in some examples.

In some examples, the thermal model (which may be a mesh model) and the structural model mesh may be identical. Therefore, there is a one-to-one correspondence between thermal nodes and structural nodes and the temperature distribution can be applied directly to the structural nodes. The temperature distribution can be applied to the structural model by node position or by node number.

In some examples, the structural model and the thermal model can be provided as meshes that are not identical. In these examples, calculating a thermal distribution can involve interpolating the temperature distribution between the nodes of the thermal model in order to determine interpolated-temperature-values at the nodes of the structural model. For instance, such interpolation can be used to combine a thermal model that is a relatively simple lumped model having only a few nodes with a FE structural model that has many nodes, that could otherwise be considered as incompatible. The deflections at the nodes of the structural model can then be calculated based on the interpolated-temperature-values.

A parametric study can be set up in conjunction with any of the certification tests, to better understand the effects of varying design parameters on the test results. Parametric studies are well known in the art (see, for example, https://www.ansys.com/-/media/ansys/corporate/resourcelibrary/whitepaper/wp-parametric-analysis.pdf). The parametric study method consists of repeating a simulation with different values of design parameters as inputs, to evaluate the effect of the design parameters on the simulation results. Any design parameter defined in the parametric description can be investigated. Examples include design tolerances, stiffness, positions and pre-displacements/-forces of the rotor. These parameters can be directly specified values or varied between user-defined limits. It is possible to investigate the effects of a single variable, or to combine several variables and run a full factorial or Monte Carlo study. Furthermore, a user-defined combination of the defined variables is available. The advantage of using design tolerances as variables in a parametric study is that the worst case tolerance stack-up can be determined and is also automatically within the test envelope.

After running the parametric study, test results are presented to the user and show the results belonging to each combination of the variables. The results can include but are not limited to the stresses of all shafts and other components, and the bearing reaction forces.

In summary, the individual tests described in this document can take operating condition data in the form of one of the following:

i) User-defined load cases

ii) Torque-Histogram Method

iii) Time-domain data.

Any of the individual tests can be combined with a thermal model and/or an efficiency model of drivetrain components or of the complete drivetrain. Any of the individual tests can be used in combination with a parametric study.

CAD and CAE-based approaches are used in designing drivetrain components, and more sophisticated approaches have used these data to estimate performance of a drivetrain component. The method of this invention allows a designer to model a drivetrain it in order to assess its compliance with one or more certification tests. The method of the invention can thus be used to produce a design that complies with one or more certification tests.

Endurance Test

Figure 3 illustrates schematically one embodiment of an endurance test. The endurance test shows the reliability and durability of the drivetrain and its components based on the requirements of standards, regulations and certification specifications of the respective authority. In general, the authorities define a thrust lever position over time. Based on drivetrain and application, the shape and characteristics of the thrust lever position vs. time can differ. In addition to the initial selection of application type, authority, etc. by the user, several possible selections are available, for example the option to include OEI (one engine inoperative) power ratings.

Once all options are chosen for the endurance test, the thrust lever position diagram is automatically transformed into a duty cycle. In this way, a load case can be assigned to each steady state operating condition of the test. The load case can be chosen from a user-defined database and has to be defined before starting the test. Whereas the duration of each load case is predefined by the chosen test, the other parameters are adopted from the chosen load case. These include but are not limited to the torque/speed/power condition of the drivetrain, temperatures, and load case dependant attributes like external forces and moments. Optionally, a short description of each required load case can be presented to the user, based on the requirements of standards, regulations and certification specifications of the respective authority. This helps the user to understand the requirements.

After running the duty cycle, test results are presented to the user and show whether the drivetrain can survive the endurance test. The results can include but are not limited to the misalignment of gears, bearings and splines, the stresses of bearings, gears, splines and all shafts and other components, the life and damage of gears, splines and bearings, the transmission error and the fatigue report of the other shafts and components.

In addition to user-defined load cases, it is possible to use the time domain approach or the Torque-Histogram-Method and even combine it with thermal analysis. This especially allows more representative life and damage calculations, since conditions during acceleration and deceleration phases and thermal cycling can also be considered. The provided results are then extended by dynamic results like dynamic forces and displacements and thermal results like temperature distributions and thermal expansions.

Flight Manoeuvre Effects Test

Figure 4 illustrates schematically one embodiment of a flight manoeuvre effects test. The test is to show that the application is able to withstand effects from flight manoeuvres. Examples of flight manoeuvre effects are gyroscopic loads and changes of g-forces, which can include inclination loads and centrifugal forces. These effects can arise from two different sources in this test. Firstly, they originate from the modelled parts and secondly, it is possible to include a special feature in the model that represents a rotor disk, for example a fan. This feature has to be set up and connected to a shaft before starting the test. Thereby the weight and the moment of inertia (polar inertia, transverse inertias) must be defined. In this way, it is possible to account for the effects of gyroscopic loads and g-forces on the model coming from a rotor disk representative of a rotor's mass and inertia, without needing to model the rotor itself in detail.

In general, the flight manoeuvre effects test is based on a quasi-static duty cycle analysis containing different load cases for different flight manoeuvres. To start the test, one or more load cases must be chosen, depending on how many different flight manoeuvres are to be investigated. The load cases have to be defined prior to the test. Required input parameters for all load cases can include but are not limited to the torque/speed/power condition of the drivetrain, temperatures, load case dependant attributes like external forces and moments. The load cases are subsequently assigned to flight conditions that can include but are not limited to flight speed, flight curve radius, roll angle, pitch rate, yaw rate and roll rate.

After running the duty cycle, test results are presented to the user and show whether the drivetrain can withstand the effects of the flight manoeuvres. The results include but are not limited to the misalignment of gears, bearings, and splines; the stresses in bearings, gears, splines, shafts, and other components; the life and damage of gears, splines, and bearings; the transmission error; and the fatigue report of shafts and other components.

When using a quasi-static analysis, the change rates and flight conditions are assumed to be steady. For more sophisticated analysis, the certification test can be investigated using time-domain analysis or the Torque-Histogram-Method, or even in combination with thermal analysis, as will be described later. The provided results are then extended by dynamic results like dynamic forces and displacements and thermal results like temperature distributions and thermal expansions.

Bird Ingestion Test

Figure 5 illustrates schematically one embodiment of a bird ingestion test. The bird ingestion test looks at the impact of birds on an engine and the resulting consequences. The desired bird test must first be selected by the user, since each authority offers different bird tests. Focussing on the aspects of the drivetrain, the bird ingestion test is split into two parts: a first part that represents the impact itself; and a second part that represents the possible unbalance run after the bird strike due to occurring damages. The two parts of the test can be run separately or in combination. In case of using the Torque-Histogram-Method, the time history file for the whole test can imported, as described later in this document.

When doing a quasi-static analysis for the first part of the test, three options are available to represent the application of a bird strike load to an aeroengine. The position of the bird strike must be defined on a shaft or blade prior to the test. The defined parameters of the bird strike feature are load case dependant. The three options are described below, and are illustrated schematically in Figure 6.

The first option can only be used if the blades are modelled. In this case, the bird strike feature is directly placed at the position where the bird impact is desired. The impact force is either a directly user-defined input or the result of an analytical impact force calculation based on the bird impulse. When using the impact force calculation method, the user first has to choose the desired bird strike test and the engine inlet throat area. This will further define the test requirements such as the number of birds and their weight related to requirements of standards, regulations and certification specifications of the respective authority. After selecting a bird, the impact force is calculated based on the bird's weight, density, and the chosen artificial geometry to represent the bird.

If the blades are not modelled, the second option can be chosen. In this case, the bird strike feature is directly placed anywhere on the fan shaft. The forces and moments are user-defined and represent the condition expected due to the bird impact.

In the case where the shaft is extended to the blade root, the third option can be utilised. Thereby, the resulting reaction force on the shaft is analytically calculated based on an imaginary impact position on the fan and the resulting lever arm. The position on the engine inlet throat is user defined. Besides that, it is possible to set up more than one bird if required in the chosen standards, regulations and certification specifications of the respective authority. The force itself can be either user-defined or calculated using the bird's impulse similar to the first option.

Once the bird strike loads are set, the test can be started. A summary of defined bird loads and their assignment to load cases can be presented to the user. Consequently, the possibility is given to choose the load cases that should be run. The total number of load cases that can be chosen depends on the chosen test and its required number of birds. In this way, it is possible for more than one bird to be set up in different load cases, assuming the birds hit the engine at different times.

Following setting up the first part of the bird ingestion test, the test can be run and the test results presented to the user. The results can include but are not limited to the misalignment of gears, bearings, and splines, and the stresses of bearings, gears, splines, shafts, and other components.

The second part of the test represents the endurance part after the bird impacts and allows the test to account for unbalances coming from damage due to bird hits. Before starting the test, one or more unbalance feature can be applied to a shaft or fan blade in the model, which allows different values to be assigned to different load cases. At the connected position, an unbalance can be represented in four ways:

i) a directly user-defined force;

ii) a defined unbalance;

iii) a calculated unbalance based on a mass and its distance to the shaft rotating axis;

iv) a calculated unbalance due to one or more missing blades. The unbalance is derived from the total number of blades, number of missing blades, their weight and the radius through their centres of gravity.

Prior-art methods for calculating unbalance response do not account for non-linearities in bearing stiffness, in particular stiffnesses that vary non-linearly with load or rotation speed. In practice, shaft whirl can increase the dynamic forces in the drivetrain, and this change in bearing forces can affect bearing stiffness.

Figure 7a illustrates a computer-implemented method for analysing the dynamics of a rotor in a drivetrain, where the drivetrain comprises at least a rotor and bearings. The first step is to build a structural model of the drivetrain. The structural model can be solved either by an iterative quasi-static analysis or a dynamic analysis. The result of the analysis is the unbalance response of the rotor. The analysis (either iterative quasi-static or dynamic) in the step of solving the structural model of the drivetrain accounts for non-linear variation of bearing stiffness with load or rotation speed. The two analysis types are different methods of solving the structural model, and will be described in more detail below.

Figure 7b illustrates a design method based on the method of Figure 7a. The method of calculating unbalance response, in either embodiment, can be used to design a drivetrain including a rotor component. The drivetrain at the top of Figure 7b is an initial drivetrain design, and then the method (in either embodiment) can be used to calculate the unbalance response of the rotor. The unbalance response can be compared to a design target (for example, a maximum permissible value of shaft whirl orbit at a given rotational speed). If the design target is not satisfied, for example if the whirl orbit is greater than the maximum permissible value, the drivetrain design can be modified. Non-limiting examples of modification include changing the rotor geometry, shaft geometry, and adding ribs to increase the housing stiffness. The unbalance response can then be calculated again for the modified design. If the design target is still not met, further modifications can ensue, and the process can be repeated until the modified design does satisfy the design target. The result of this design process is a drivetrain design which meets the design target for unbalance response.

Two methods for including dynamic effects in unbalance response calculation are described below, which both solve the technical problem of how to include these dynamic effects and provide an accurate calculation of unbalance response. The difference between the two methods is in how the structural model of the drivetrain is solved.

In a first method for including dynamic effects in unbalance response calculations, dynamic bearing loads can be accounted for by iteratively applying a quasi-static analysis. The quasi-static analysis is repeated several times for a given rotational speed, iteratively converging on a solution that includes the effect of bearing stiffness dependent on dynamic loads. This method can be applied to a shaft supported by two bearings, and the process is illustrated schematically in Figure 8a.

Figure 8a shows a quasi-static analytical approach to approximate dynamic loads when calculating an unbalance response. In step 800 an initial rotational speed is chosen, and for this given rotational speed an initial value of unbalance is applied on the shaft in step 802. Structural analysis is run and solved quasi-statically in step 804. The bearing reaction forces 810 are extracted from the quasi-static analysis results 806, and bearing reaction forces are applied as a quasi-static load in step 812. This quasi-static load represents the bearing dynamic loads resulting from the shaft whirl, but has the advantage that a dynamic analysis is not required. The quasi-static load can be applied at a given position along the shaft, for example the centre of the shaft, the centre of gravity of the shaft, an intermediate position calculated from the bearing loads, or directly at the bearings. The quasi-static load applied in step 812 can be equal to the sum of the bearing reaction forces 810, or can be set as some fraction of the bearing reaction forces. For example, the quasi-static load can be defined an half of the bearing reaction forces. The applied quasi-static load is used in the next iteration of quasi-static analysis, which is run again at step 804. The process is repeated via an iterative loop 816. At each iteration, the quasi-static analysis results are compared with the results from the previous iteration at step 808. The results to be compared can include bearing reaction force and shaft whirl. If the results have converged, the method outputs the analysis results for the given rotational speed at step 818. If the results have not converged, the iteration continues.

One or more loop-end-conditions can be used at step 808 to determine whether the quasi-static analysis results have converged. If the one or more loop-end-conditions are not satisfied, then the method moves on to step 810 and repeats the loop 816. If the one or more loop-end-conditions are satisfied, then the method ends at step 818 with the output of the results for the given rotational speed.

Non-limiting examples of how loop-end-conditions can be applied include:

Determining a rate of convergence for the value that is being compared with the loop-end-conditions, and comparing the rate of convergence with a threshold-value that is indicative of the value being sufficiently settled. If the threshold-value is satisfied, then determining that the loop-end-condition has been satisfied. In this way, the loop can be repeated until the values do not change within a user-specified tolerance.

Determining a number of iterations around the loop that have been performed, and comparing this number with a maximum number of iterations. If the maximum number has been reached, then determining that the loop-end-condition has been satisfied.

Determining the difference between a quasi-static analysis result for the current iteration of the loop with the value of the same quasi-static analysis result calculated on the previous iteration of the loop, and comparing this difference with a threshold-value that represents acceptable convergence. If the difference between the quasi-static analysis result on consecutive loops is less than the threshold-value, then determining that the loop-end-condition has been satisfied. This "difference" can be an absolute difference or a relative difference (for example expressed as a percentage). In this way, the iterative loop can stop iterating when the value is within 1%, for example, of its value from the previous iteration.

The quasi-static analysis results to be evaluated for convergence in step 808 can include bearing reaction force and shaft whirl. These results will be valid only at the chosen rotational speed.

After defining the unbalance features in the model, the input of the required data for the second test part can be completed. Based on the chosen bird strike test, a duty cycle containing different load cases will be presented to the user. To run the second part of the test, user-defined load cases must be assigned to pre-defined conditions of the endurance run after the bird strike scenario. Whereas the duration of each load case is predefined by the selected test, the other parameters are adopted from the chosen load case. These can include but are not limited to the torque/speed/power condition of the drivetrain, temperatures, and load case dependant attributes like the unbalance features.

In a second method for including dynamic effects in unbalance response calculations, the structural model of the complete drivetrain is solved dynamically, in a time-domain transient analysis. Figure 8b illustrates schematically this second embodiment. To calculate whirl orbit at critical speed, a sub-critical starting speed is chosen, and the speed increased until resonance (critical speed) is reached. Initial values for loads and stiffnesses are set in step 821. At each timestep the structural model solved at step 822, and the bearing loads, displacements, and stiffnesses calculated at step 823. The time is then incremented by one timestep at step 824, the rotational speed is increased in step 825, and the next iteration begins. The steps 822-823-824-825-822 form an iterative loop 826. The loads, displacements, and stiffnesses calculated in step 823 of the previous iteration are used to solve the structural model in step 822. As the resonance is approached, the dynamic loads on the bearings become significant. In some examples, the bearing loads increase at a faster rate than the bearing displacements, leading to increased bearing stiffness. This increased bearing stiffness in turn increases the value of the shaft critical speed. At each timestep the dynamic bearing loads are calculated and used to update the bearing stiffness. The whirl orbit also increases with speed, reaching a maximum displacement when resonance is reached. This method gives an accurate result, but can be computationally expensive.

This second method for including dynamic effects can include non-linear stiffness of any non-linear components such as gears, bearings, and splines. Any excitation in the drivetrain system can be included in the analysis, for example gear transmission error, engine torque ripple, electric machine torque ripple, and electric machine radial/axial/tangential forces. The excitation can be applied at step 822 before solving the structural model.

Besides that, it is possible to look at the results at different rotation angles of the shafts, and therefore of the unbalance. For this reason, it is possible to set up a user-defined number of steps over a whole rotation of the drivetrain. Furthermore, there is the option to include dynamic analysis in the frequency domain to investigate shaft whirl orbits and operational deflection shapes due to excitations including the unbalance effect. These results are calculated for each steady state and require a selection of components to be included in the dynamic analysis. When choosing the operational deflection shape analysis, the force from the defined force in the unbalance feature is automatically transformed to a rotating force to excite the drivetrain.

After running the duty cycle, test results are presented to the user and show whether the drivetrain can survive the bird strike endurance test. The results can include but are not limited to the misalignment of gears, bearings and splines; the stresses of bearings, gears, splines, shafts, and other components; the life and damage of gears, splines, and bearings; and the fatigue report of the shafts and components. Enabling the method to look at different steps over the rotation of the drivetrain allows identification of any changes over the rotation angle due to the imbalance. Moreover, the tracking of changes over 360 degrees is provided. The changes that can be tracked can include but are not limited to shaft deflections, gear misalignment, maximum gear contact stress, bearing misalignment, and maximum ball raceway contact stress. When dynamic analysis is included in the test, the results can be extended by the whirl orbit plots and nyquist/polar plots at defined points along the shafts. Moreover, the acceleration, the velocity, and the displacement of the 3D components as well as their strain and kinetic energy can be presented to the user along with operational deflection shape results.

Besides the described procedure above, the Torque-Histogram-Method is available as an alternative to represent the operating conditions for the bird ingestion test. The main difference is that, instead of assigning load cases, the time history is imported, and represents the complete test. The time history can be calculated from a drivetrain model or even a more extended model, where the drivetrain is connected to its full environment. If a separate software package is used, the results can be imported in the form of a time history file containing all required information for each time step, including dynamic loads, or simply as a list of the torque bins together with time duration or number of cycles for each one, and other parameters as appropriate. In this way, the confidence in the reacting forces and moments on the drivetrain is much higher and allows more representative life and damage calculations. The dynamic parameters and the definition of steps over the whole drivetrain rotation have to be set up in the same way for the Torque-Histogram-Method as described previously with user-defined load cases. For further analysis, the certification test can also be investigated using time-domain analysis or the Torque-Histogram-Method or even in combination with thermal analysis. This allows a more sophisticated analysis approach but will also increase simulation effort. The provided results are then extended by dynamic results like dynamic forces and displacements and thermal results like temperature distributions and thermal expansions.

Compressor and Turbine Blade Failure

The compressor and turbine blade failure test simulates the conditions when a blade is released. This test shows a similar approach to the second part of the bird ingestion test, the unbalance run, and uses the same unbalance feature. The missing blade is represented by the unbalance force in a quasi-static analysis approach. In order to account for the rotating unbalance force leading to different conditions, a whole rotation of the drivetrain can be fragmented into user-defined time steps in the same way as in the second part of the bird ingestion test. Besides that, the additional selectable dynamic analysis, the Torque-Histogram-Method and the provided results are the same as for the bird ingestion test. The only exception is that life results are not considered due to the fact that the run time after blade release is very short. A complete power failure is permitted, as long there is no hazard to the aircraft. The analysis can also be done in time domain or by using the Torque-Histogram-Method. The provided results are then extended by dynamic results like dynamic forces and displacements and thermal results like temperature distributions and thermal expansions.

Vibration Test

Figure 9 illustrates schematically one embodiment of a vibration test. The vibration test is about the vibration characteristic of all components of the drivetrain. The aim is to identify whether a critical speed is within the drivetrain's operating range, and to show the resulting vibratory stresses.

For investigating the vibrations and the occurring stresses, response amplitudes can be obtained at specific locations of the drivetrain over a speed/frequency range. In order to employ this option, a monitoring node has to be set prior to running the test. This can be at the same positions as strain gauges in hardware tests.

Besides that, the most important task in this test is to define the excitation source, which determines the fidelity and quality of the results. In this context, all influences can be taken into account like unbalances, transmission errors of gears, external forces and oscillations and the coupling to its environment. In some cases, they have to be pre-defined in the model before running the vibration test. If using the transmission error as an excitation, a quasi-static transmission analysis is automatically conducted before running the dynamic analysis.

Once the vibration test has been selected, the user has to set up a speed and frequency range. The range is automatically scaled employing a scale factor, known as the upper residual, to account for out of range modes. Although a mode may have its greatest influence at the natural frequency, its influence extends both above and below the natural frequency. The lower tails of the modes above our frequency range of interest therefore have an influence within the range of interest. If a rising response amplitude is recognized when leaving the specified range, the range of interest will be automatically increased by a certain amount according to the standards and specifications.

After completing the setup, the test can be run and the results will be presented to the user. The results can comprise one or more of the following six main parts:

The natural frequencies and the associated mode shapes of the single shafts as well as of the whole drivetrain.

A damped naturally frequency map of the single shafts and the whole drive train is presented which gives an overview of critical points in the speed range.

The kinetic and the strain energy is provided as a trace over speed for a component.

A trace over speed at specific positions, where the trace comprises one or more of velocity, acceleration, deflection, and stress.

The velocity, the acceleration, the deflection and the stress for the whole drivetrain at a specific speed. Thereby the user can easily determine the speeds with the highest response for each monitor node. The response of the full drivetrain can be plotted at these speeds, or at any other speed defined by the user.

Fatigue calculations based on resulting stresses and occurring forces

Over-Torque Test, Over-Speed Test, Exhaust Gas Over-Temperature Test and Over-Temperature Test The over-torque test, over-speed test, exhaust gas over-temperature test and over-temperature test are described together due to their similar requirements. All four tests have to be run for a certain duration at the worst conditions due to speed, torque and temperatures. Therefore, a similar approach is utilised for all of them, which is also very similar to the already described endurance test. The main difference is that only one thrust lever position is defined. However, the duration of the over-torque test, the over-speed test, and the exhaust gas over-temperature test can be split into user-defined parts. In this case, the number of load cases increases and especially changing temperature conditions can be considered.

In general, all four tests can be run separately or in combination with the endurance test. When run together with the endurance test, the results are also combined, which affects especially the cumulative results like life and damage. If the aforementioned tests are run separately, there is the option to combine them with a One Engine Inoperative (OEI) power rating, which calculates the rated power if one of the engines in the drivetrain is not in operation. Although an OEI run is not a compulsory part of the standard tests for over-torque, over-speed, exhaust gas over-temperature, and over-temperature, it can be used to show conformity to requirements to still be able to reach OEI power under these specific test conditions. In this case, the cumulative results are summarised for the chosen tests as well.

Once all options are chosen, the requirements and desired combination options are automatically transformed into load cases. To each steady state of the test a load case can be assigned, which is chosen from a user-defined database and has to be defined before starting the test. Whereas the duration of each load case is predefined by the chosen test and options, the other parameters are adopted from the assigned load case. These can include but are not limited to the torque/speed/power condition of the drivetrain, temperatures, and load case dependant attributes like external forces and moments.

After running the load cases, test results are presented to the user and show whether the drivetrain can survive the test. The results can include but are not limited to the misalignment of gears, bearings and splines; the stresses of bearings, gears, splines, shafts, and other components; the transmission error; and the life and damage of gears, splines, and bearings. Based on the selected options, the results can be separate or in combination with other tests.

The analysis approach can also be done in time domain or by using the Torque-Histogram-Method or combined with thermal analysis. This allows a more sophisticated analysis approach but will also increase simulation effort. The provided results are then extended by dynamic results like dynamic forces and displacements and thermal results like temperature distributions and thermal expansions.

Rotor Integrity Test

Figure 10 illustrates schematically one embodiment of a rotor integrity test. The rotor integrity test is used to show that a rotor will not burst under the most critical conditions, which depend on the requirements of standards, regulations and certification specifications of the respective authority. Since the test includes two conditions, two load cases have to be assigned to the test. Nevertheless, it is also possible to only run one of the two load cases. The load case itself can be chosen from a user-defined database and has to be defined before starting the test. Whereas the duration of each load case is predefined by the chosen test, the other parameters are adopted from the chosen load case. These can include but are not limited to the torque/speed/power condition of the drivetrain, temperatures, and load case dependant attributes like external forces and moments.

For further analysis, the certification test can also be investigated using time-domain analysis or the Torque-Histogram-Method or even in combination with thermal analysis. The provided results are then extended by dynamic results like dynamic forces and displacements and thermal results like temperature distributions and thermal expansions.

Loss of Lubrication Test

Figure 11 illustrates schematically one embodiment of a loss of lubrication test. The loss of lubrication test should show that a drivetrain is able to survive for a certain amount of time after a lubrication system failure based on the requirements of standards, regulations and certification specifications of the respective authority. This test is especially relevant for the rotorcraft industry, whereby the maximum weight and the number of seats of the rotorcraft defines the test duration. Therefore, the user has to choose these settings at first.

Once all options are chosen, the resulting duration can be split up into a user-defined number of load cases. In this way, a load case can be assigned to each steady state of the test. The load case can be chosen from a user-defined database and has to be defined before starting the test. Whereas the duration of each load case is predefined, the other parameters are adopted from the chosen load case. These can include but are not limited to the torque/speed/power condition of the drivetrain, temperatures, and load case dependant attributes like external forces and moments. Although the speed/torque/power settings should be the same in all load cases, the use of various load cases permits the consideration of changing temperature conditions. Thereby, different levels of fidelity are available. Three approaches are described below:

The most basic approach would be to apply the same temperature to all components.

An improved approach is to set up different temperatures for each component.

The most advanced approach showing the highest fidelity available is to define the temperature distribution for each component.

Especially when applying the third approach, an estimation of arising temperatures becomes very difficult. Therefore, this test also provides the opportunity to couple the transmission analysis with thermal analysis. By doing so, the quasi-static efficiency results of gears, bearings, carriers, seals and further drivetrain components are used as an input to a transient 1 D thermal simulation of the drivetrain. The running time of the 1D thermal simulation is based on the chosen time step or total duration of load cases and feeds the air and lubrication temperature into a 3D thermal analysis at the end of each time step to calculate the steady-state temperature distribution of each component. These temperature distributions are applied to the drivetrain model and serve as basis for efficiency calculations for the next time step or load case.

After running all load cases, test results are presented to the user and show whether the drivetrain can survive the loss of lubrication test. The results can include but are not limited to the misalignment of gears, bearings, and splines; the stresses of bearings, gears, splines, shafts, and other components; the life and damage of gears, splines, and bearings; the pitting report; the scuffing report; and the temperature distributions of the whole drivetrain.

In addition to the described methods above, it is also possible to use the Torque-Histogram-Method. This approach is helpful if transient dynamic and thermal results are calculated in a third-party software. In this context, the time history can be calculated from a drivetrain model or even a more extended model, where the drivetrain is connected to its full environment. If a separate software package is used, the results can be imported in the form of a time history file containing all required information for each time step, including transient dynamic and thermal results, or simply as a list of the torque bins together with time duration or number of cycles for each one, and other parameters as appropriate. In this way, load case dependent attributes like temperatures or forces and moments are not estimated but simulated input parameters. The certification test can also be investigated by a time domain analysis, which will increase the simulation effort drastically.

## Claims

1. A computer-implemented method for modelling a drivetrain, the method comprising the steps of:

    a) receiving a selection of a certification test from a plurality of certification tests;
    b) receiving a parametric description of the drivetrain;
    c) receiving a selection of one or more analysis types appropriate for the selected certification test and the parametric description;
    d) providing a certification test model of the drivetrain based on the selected certification test, the parametric description, and the one or more analysis types;
    e) simulating performance of the drivetrain using the certification test model; and
    f) determining whether the drivetrain is compliant with the certification test based on the simulated performance.

2. The method of claim 1, wherein, if the drivetrain is not compliant with the certification test requirements, the method further comprises modifying the parametric description and repeating steps d) to f) until a the drivetrain is compliant with the certification test requirements.

3. A computer-implemented method according to claim 1, in which operating conditions for the certification test are in the form of load cases, a histogram calculated using the Torque-Histogram-Method, or time-domain data.

4. A computer-implemented method according to claim 3, in which the operating conditions are in the form of time-domain data, and the one or more analysis types includes time-domain analysis.

5. A computer-implemented method according to claim 1, in which test requirement criteria are transformed into a pre-defined format, comprising one or more of:

step c) comprising the step of pre-defining the one or more analysis types;
step b) additionally comprising the step of predefining input parameters;
step b) additionally comprising the step of predefining load cases..

**6.** A computer-implemented method according to any of claims 1 to 7, in which the selected test is an endurance test and the test requirement criteria include thrust lever positions.

**7.** A computer-implemented method according to claim 1, in which the selected test is a flight manoeuvre effects test and the gyroscopic and centrifugal effects can arise from modelled components and additional drivetrain components (for example, a fan) that are modelled as a representative rotor disk.

**8.** A computer-implemented method according to claim 1, in which the selected test is a bird ingestion test, comprising two parts:

i. an initial impact representing one or more bird strikes; and
ii. a resulting unbalance analysis.

**9.** A computer-implemented method according to claim 8, in which the unbalance is modelled using an approach selected from the following:

i. a user-defined force;
ii. a user-defined unbalance;
iii. a calculated unbalance, calculated from a given mass and displacement;
iv. a calculated unbalance, calculated by removing a fan or turbine blade.

**10.** A computer-implemented method according to claim 9, the method comprising:

a) building a structural model of the drivetrain;
b) solving the structural model of the drivetrain, using either

i) an iterative quasi-static analysis
or
ii) a dynamic analysis
of the structural model of the drivetrain;

c) calculating the unbalance response of the rotor;

wherein the analysis in step b) accounts for non-linear variation of bearing stiffness with load or rotation speed.

**11.** A computer-implemented method according to claim 10, in which the step of solving is a quasi-static iterative method, comprising the steps of:

a) selecting a rotational speed;
b) applying an unbalance to a rotor shaft;
c) running a quasi-static structural analysis at the selected rotational speed;
d) calculating bearing reaction forces;
e) applying bearing reaction forces as a quasi-static load;
f) repeating steps b) to e) until the analysis results converge;
g) outputting the results for the given rotational speed.

**12.** A computer-implemented method according to claim 1, in which the selected test is a vibration test, including sources of excitation within the drivetrain, and wherein one or more monitoring nodes defines the position at which the vibration response is to be evaluated.

**13.** A computer-implemented method according to claim 12, in which the test includes a calculation of one or more of the following:

i. the natural frequencies and the associated mode shapes of the shafts;

ii. a damped natural frequency map;
iii. the kinetic and the strain energy as a function of speed for a component;
iv. a trace over speed at specific positions, where the trace comprises one or more of velocity, acceleration, deflection, and stress;
v. the value of one or more of velocity, acceleration, deflection, and stress at a specific speed.

**14.** A computer-implemented method according to claim 1, in which the selection of one or more analysis types includes a thermal analysis, the thermal analysis further comprises:

building a structural meshed model based on the parametric description;
building a meshed-thermal-model based on the structural meshed model;
calculating a temperature distribution for one or more components of the drivetrain using: (i) the meshed-thermal-model; and (ii) one or more fluid temperatures associated with the drivetrain;
determining the efficiency of one or more components of the drivetrain, based on the temperature distribution; and
determining whether the drivetrain passes the certification test.

**15.** A computer-implemented method according to claim 14, further comprising:

creating a lumped-parameter-thermal-model of the drivetrain;
calculating the fluid temperature associated with the drivetrain based on the lumped-parameter-thermal-model.

Figure 1

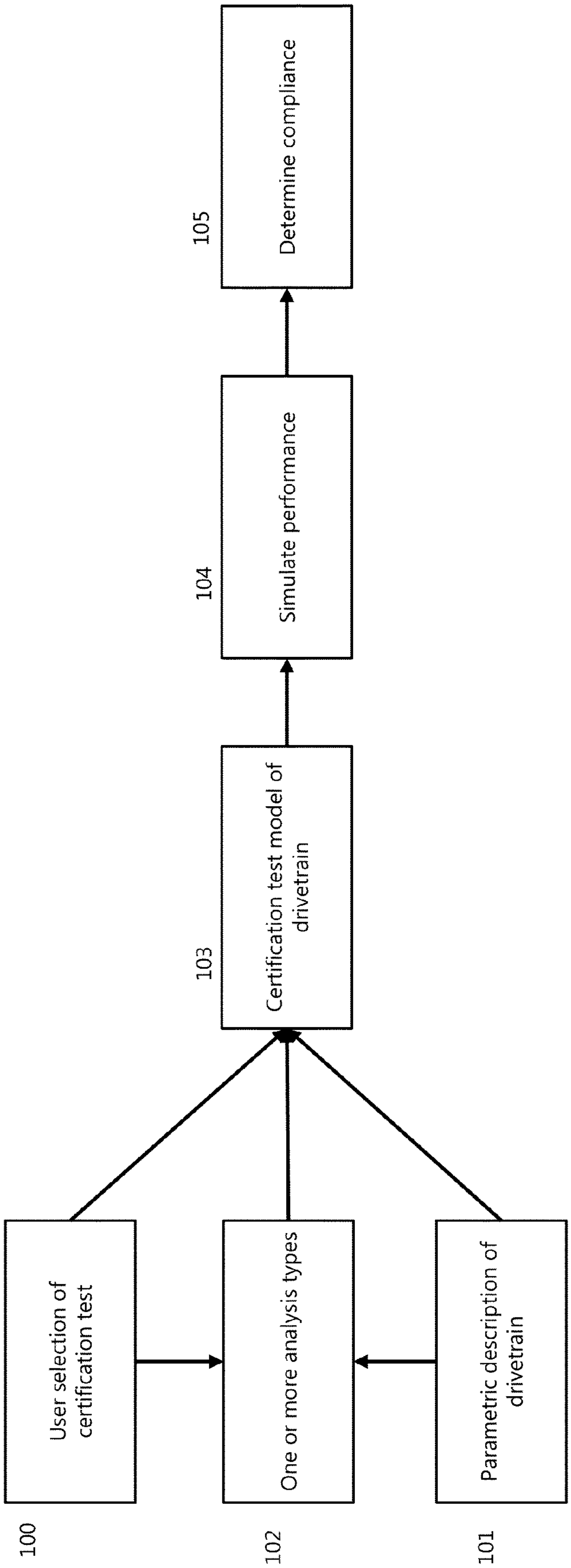
105
Determine compliance
104
Simulate performance
103
Certification test model of drivetrain
User selection of certification test
One or more analysis types
Parametric description of drivetrain
100
102
101

Figure 2a

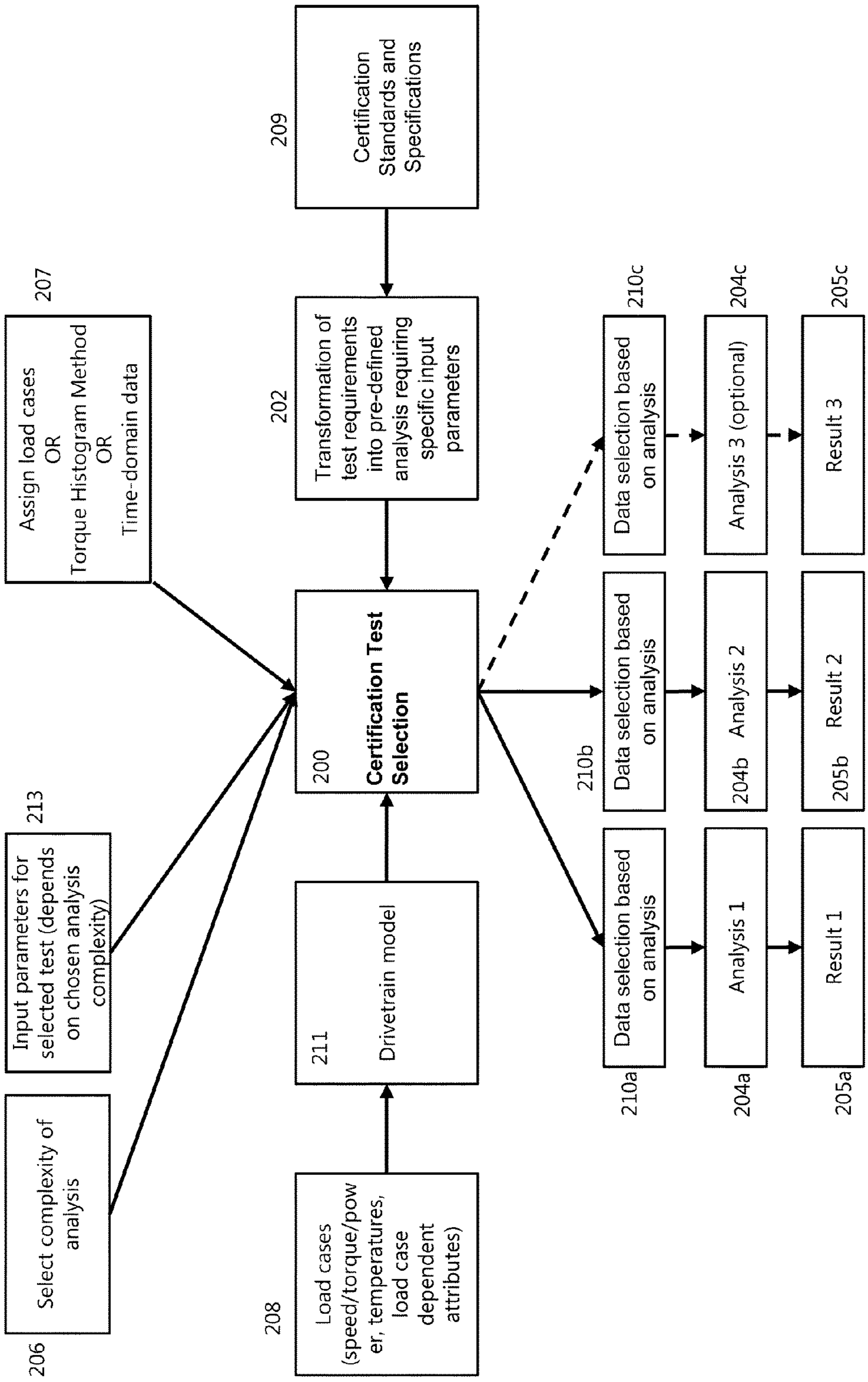
206
Select complexity of analysis
213
Input parameters for selected test (depends on chosen analysis complexity)
207
Assign load cases
OR
Torque Histogram Method
OR
Time-domain data
208
Load cases (speed/torque/power, temperatures, load case dependent attributes)
211
Drivetrain model
200
Certification Test Selection
202
Transformation of test requirements into pre-defined analysis requiring specific input parameters
209
Certification Standards and Specifications
210a
Data selection based on analysis
210b
Data selection based on analysis
210c
Data selection based on analysis
204a
Analysis 1
204b
Analysis 2
204c
Analysis 3 (optional)
205a
Result 1
205b
Result 2
205c
Result 3

Figure 2b

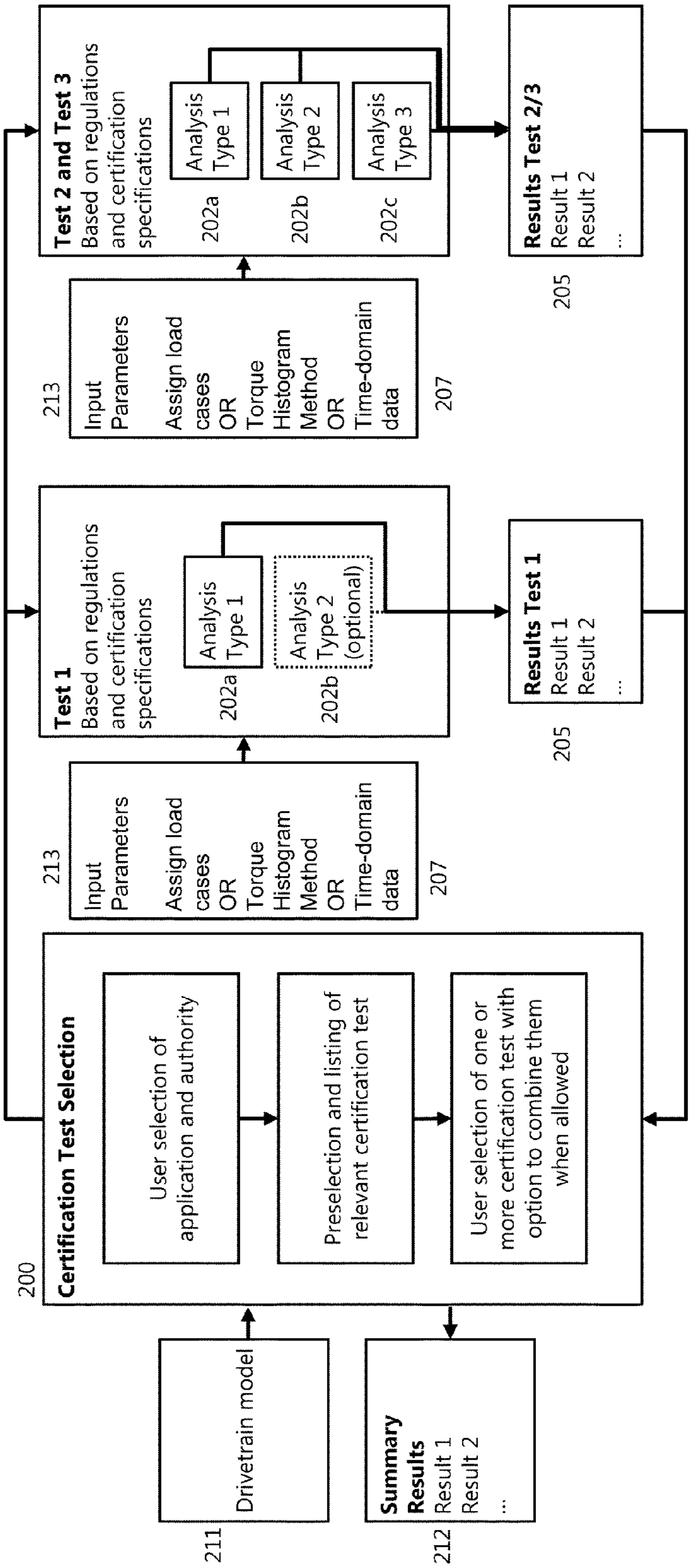
200
Certification Test Selection
User selection of application and authority
Preselection and listing of relevant certification test
User selection of one or more certification test with option to combine them when allowed
211
Drivetrain model
212
Summary Results
Result 1
Result 2
...
213
Input Parameters
Assign load cases OR Torque Histogram Method OR Time-domain data
207
Test 1
Based on regulations and certification specifications
202a
Analysis Type 1
202b
Analysis Type 2 (optional)
Results Test 1
Result 1
Result 2
...
205
213
Input Parameters
Assign load cases OR Torque Histogram Method OR Time-domain data
207
Test 2 and Test 3
Based on regulations and certification specifications
202a
Analysis Type 1
202b
Analysis Type 2
202c
Analysis Type 3
Results Test 2/3
Result 1
Result 2
...
205

Figure 3

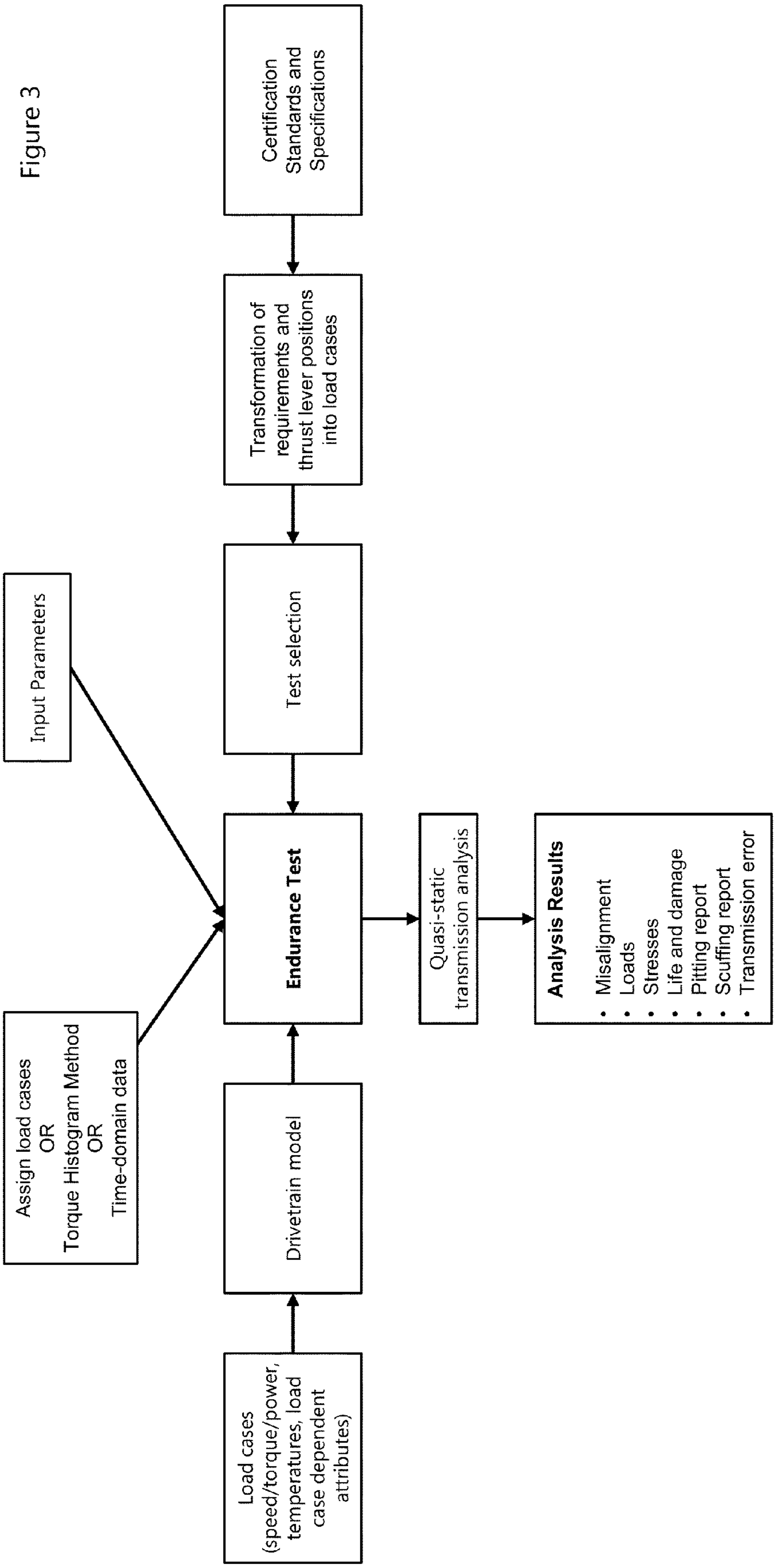
Certification Standards and Specifications
Transformation of requirements and thrust lever positions into load cases
Test selection
Input Parameters
Assign load cases
OR
Torque Histogram Method
OR
Time-domain data
Load cases (speed/torque/power, temperatures, load case dependent attributes)
Drivetrain model
Endurance Test
Quasi-static transmission analysis
Analysis Results
• Misalignment
• Loads
• Stresses
• Life and damage
• Pitting report
• Scuffing report
• Transmission error

Figure 4

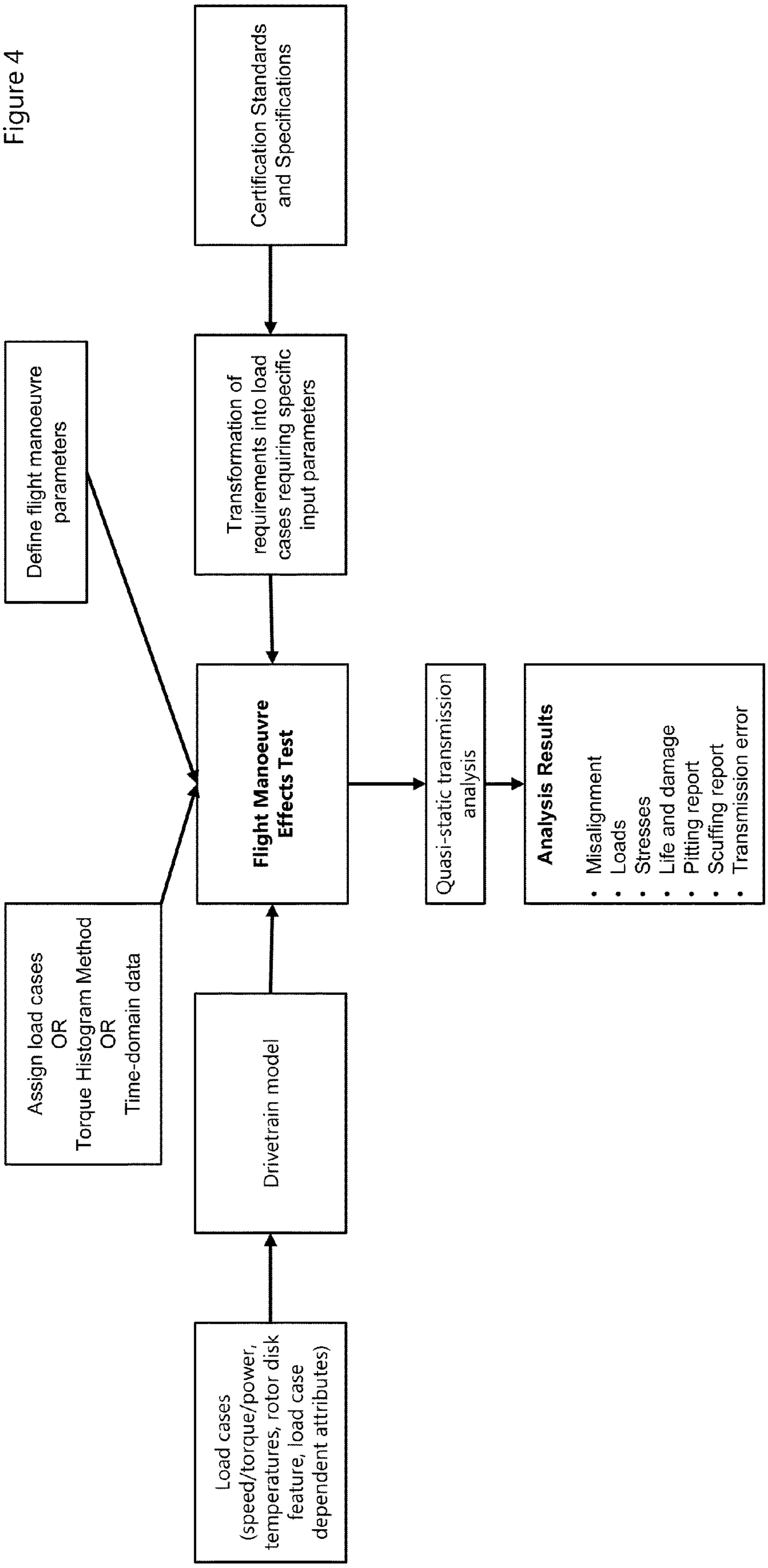
Certification Standards and Specifications
Transformation of requirements into load cases requiring specific input parameters
Define flight manoeuvre parameters
Flight Manoeuvre Effects Test
Assign load cases OR Torque Histogram Method OR Time-domain data
Drivetrain model
Load cases (speed/torque/power, temperatures, rotor disk feature, load case dependent attributes)
Quasi-static transmission analysis
Analysis Results
• Misalignment
• Loads
• Stresses
• Life and damage
• Pitting report
• Scuffing report
• Transmission error

Figure 5

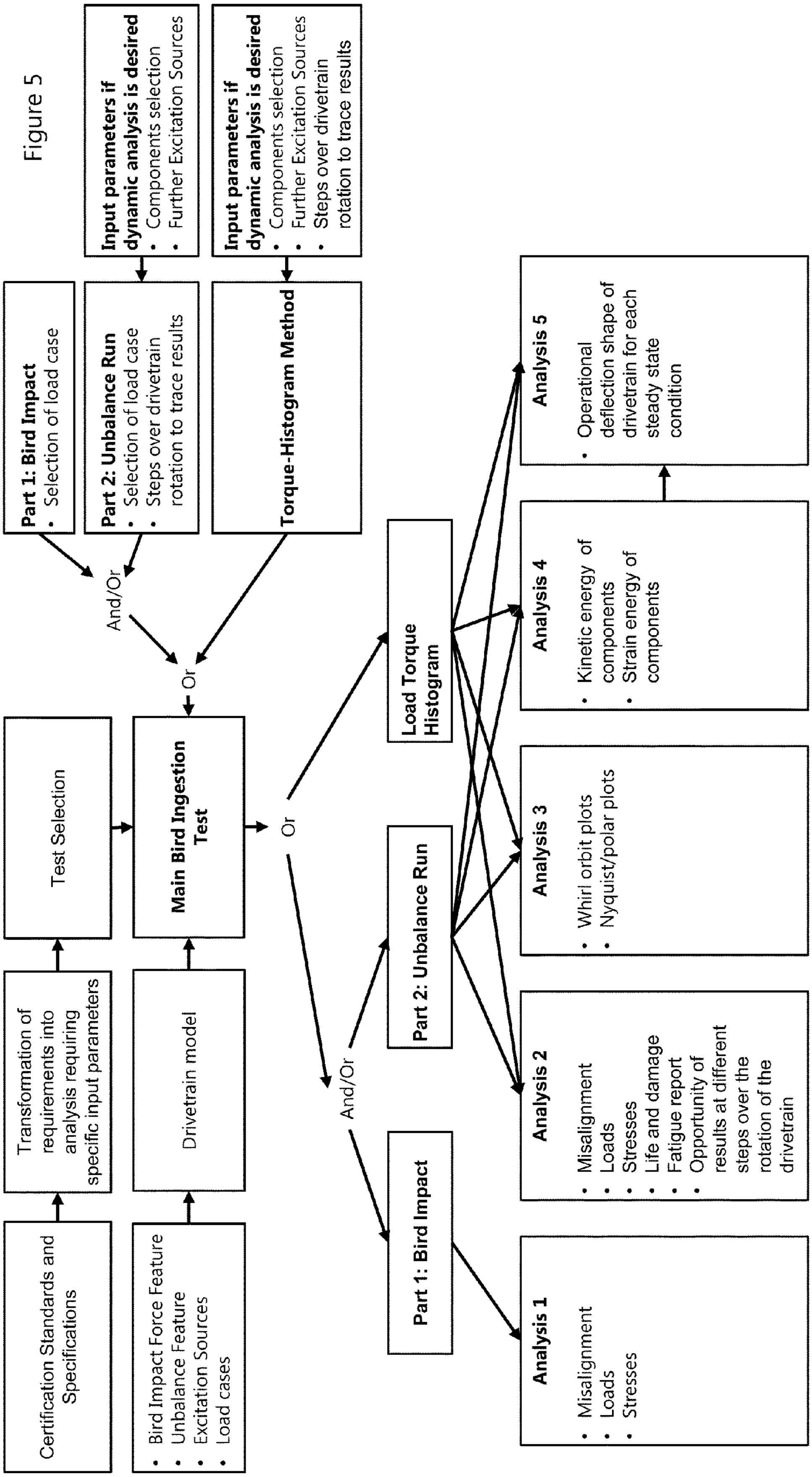
Certification Standards and Specifications
Transformation of requirements into analysis requiring specific input parameters
Test Selection
• Bird Impact Force Feature
• Unbalance Feature
• Excitation Sources
• Load cases
Drivetrain model
Main Bird Ingestion Test
Part 1: Bird Impact
• Selection of load case
Part 2: Unbalance Run
• Selection of load case
• Steps over drivetrain rotation to trace results
Torque-Histogram Method
Input parameters if dynamic analysis is desired
• Components selection
• Further Excitation Sources
Input parameters if dynamic analysis is desired
• Components selection
• Further Excitation Sources
• Steps over drivetrain rotation to trace results
And/Or
Or
Or
And/Or
Part 1: Bird Impact
Part 2: Unbalance Run
Load Torque Histogram
Analysis 1
• Misalignment
• Loads
• Stresses
Analysis 2
• Misalignment
• Loads
• Stresses
• Life and damage
• Fatigue report
• Opportunity of results at different steps over the rotation of the drivetrain
Analysis 3
• Whirl orbit plots
• Nyquist/polar plots
Analysis 4
• Kinetic energy of components
• Strain energy of components
Analysis 5
• Operational deflection shape of drivetrain for each steady state condition

Figure 6

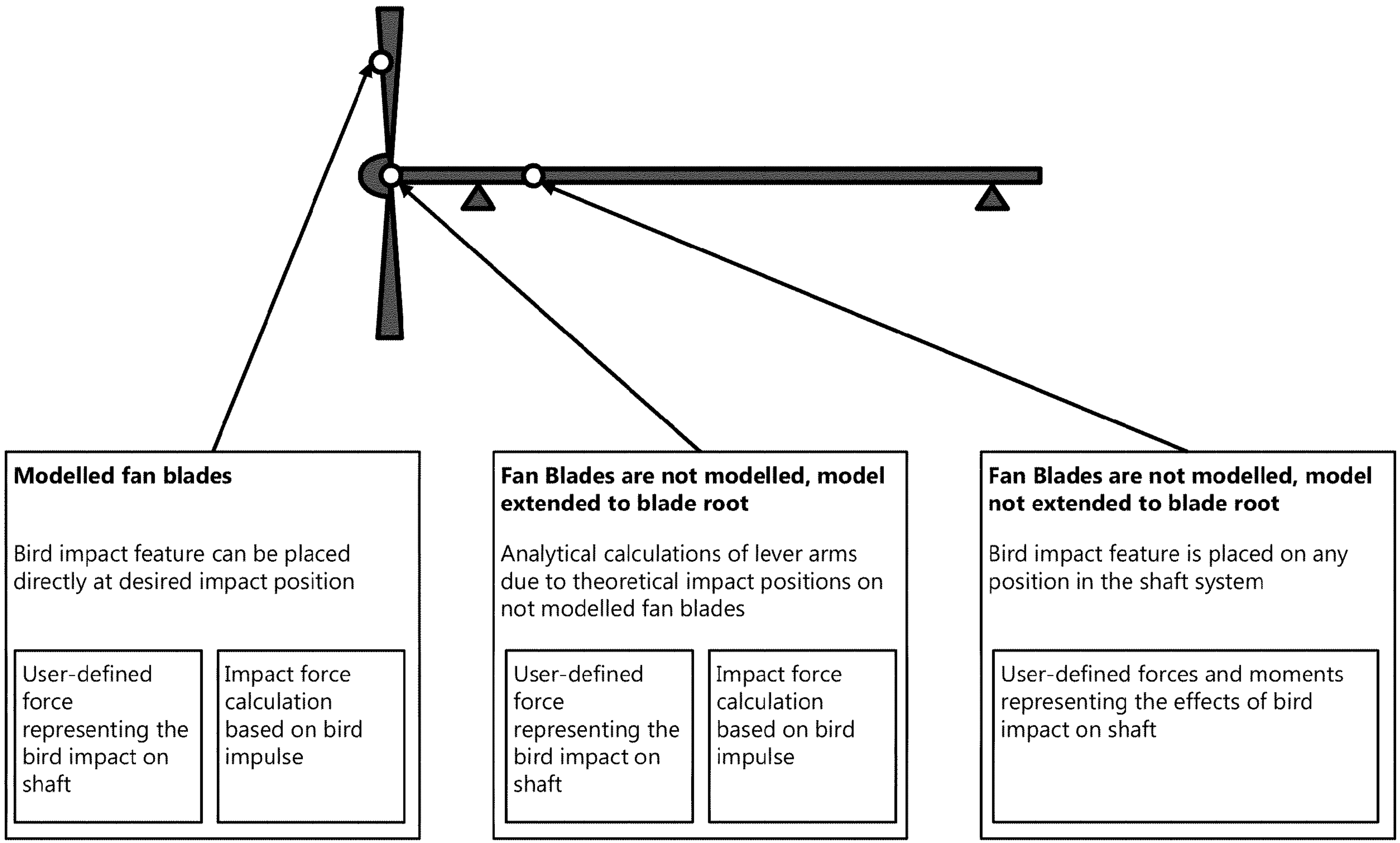
**Modelled fan blades**
Bird impact feature can be placed directly at desired impact position
User-defined force representing the bird impact on shaft
Impact force calculation based on bird impulse
**Fan Blades are not modelled, model extended to blade root**
Analytical calculations of lever arms due to theoretical impact positions on not modelled fan blades
User-defined force representing the bird impact on shaft
Impact force calculation based on bird impulse
**Fan Blades are not modelled, model not extended to blade root**
Bird impact feature is placed on any position in the shaft system
User-defined forces and moments representing the effects of bird impact on shaft

Figure 7a

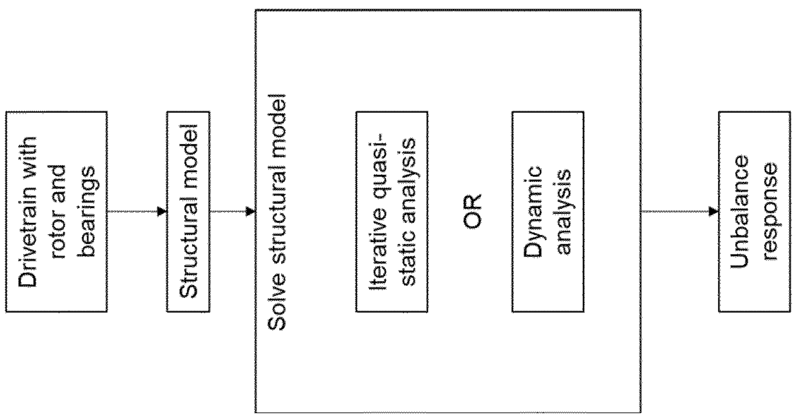


Figure 7b

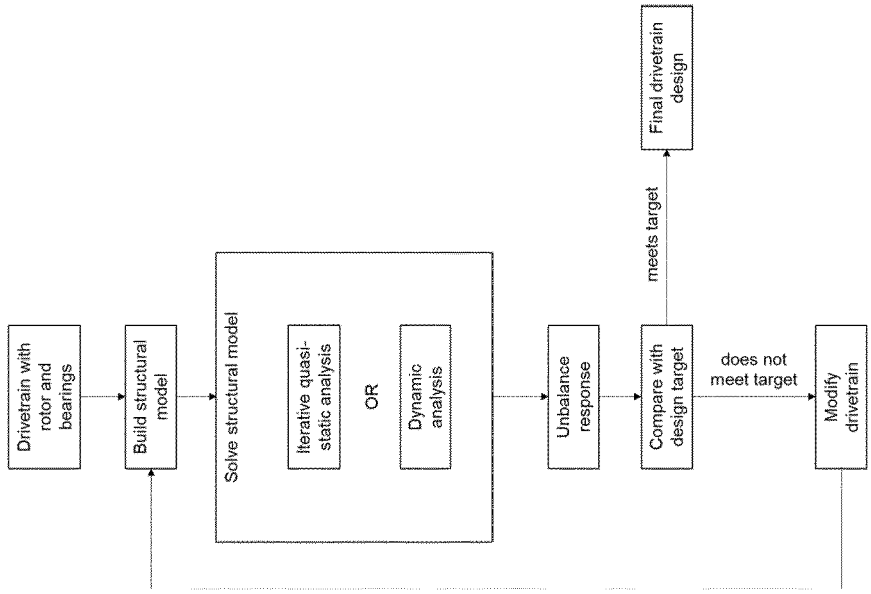

Figure 8a

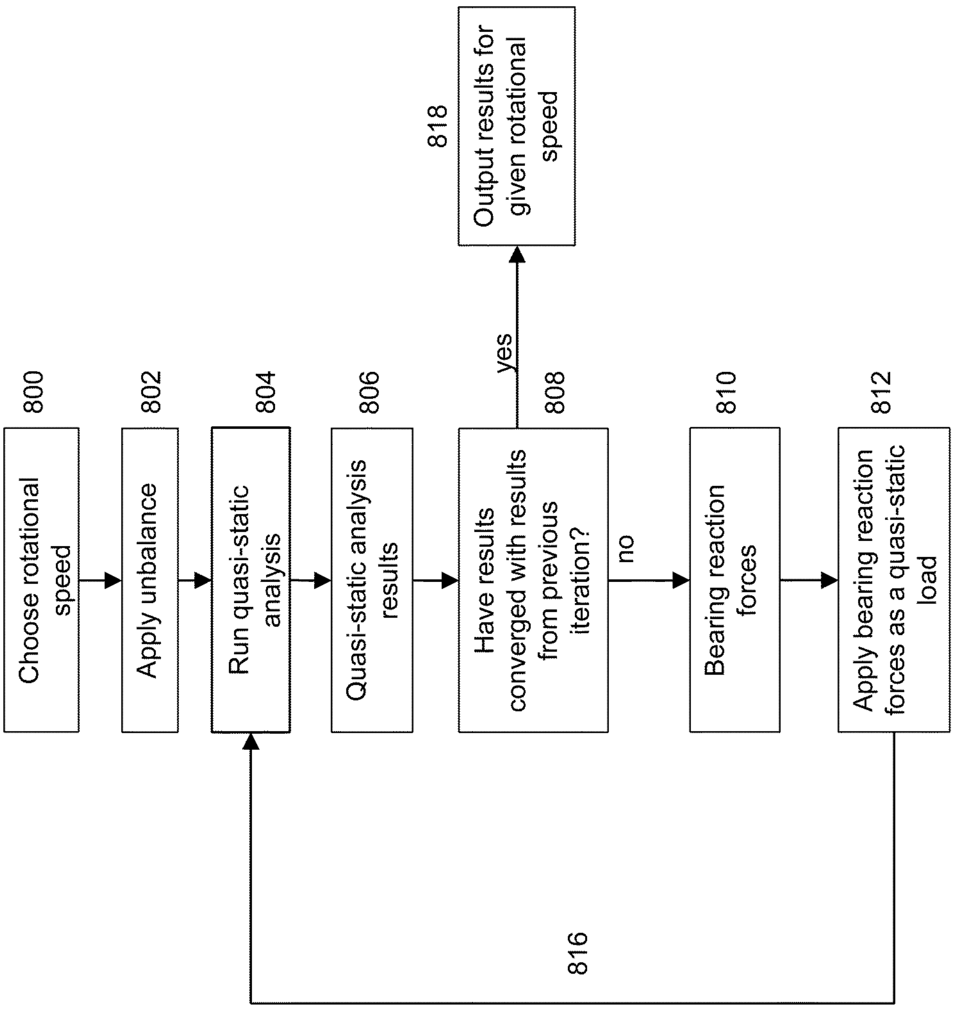
800
Choose rotational speed
802
Apply unbalance
804
Run quasi-static analysis
806
Quasi-static analysis results
808
Have results converged with results from previous iteration?
yes
818
Output results for given rotational speed
no
810
Bearing reaction forces
812
Apply bearing reaction forces as a quasi-static load
816

Figure 8b

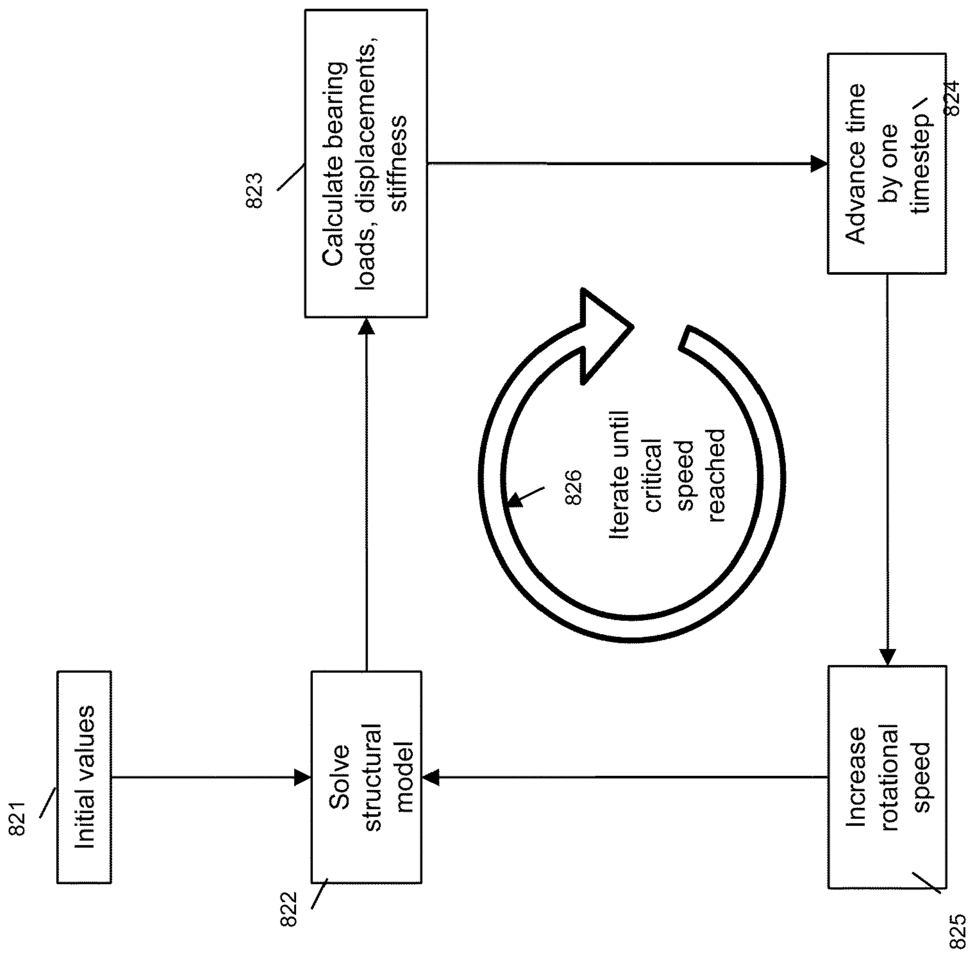
821
Initial values
822
Solve structural model
823
Calculate bearing loads, displacements, stiffness
824
Advance time by one timestep
825
Increase rotational speed
826
Iterate until critical speed reached

Figure 9

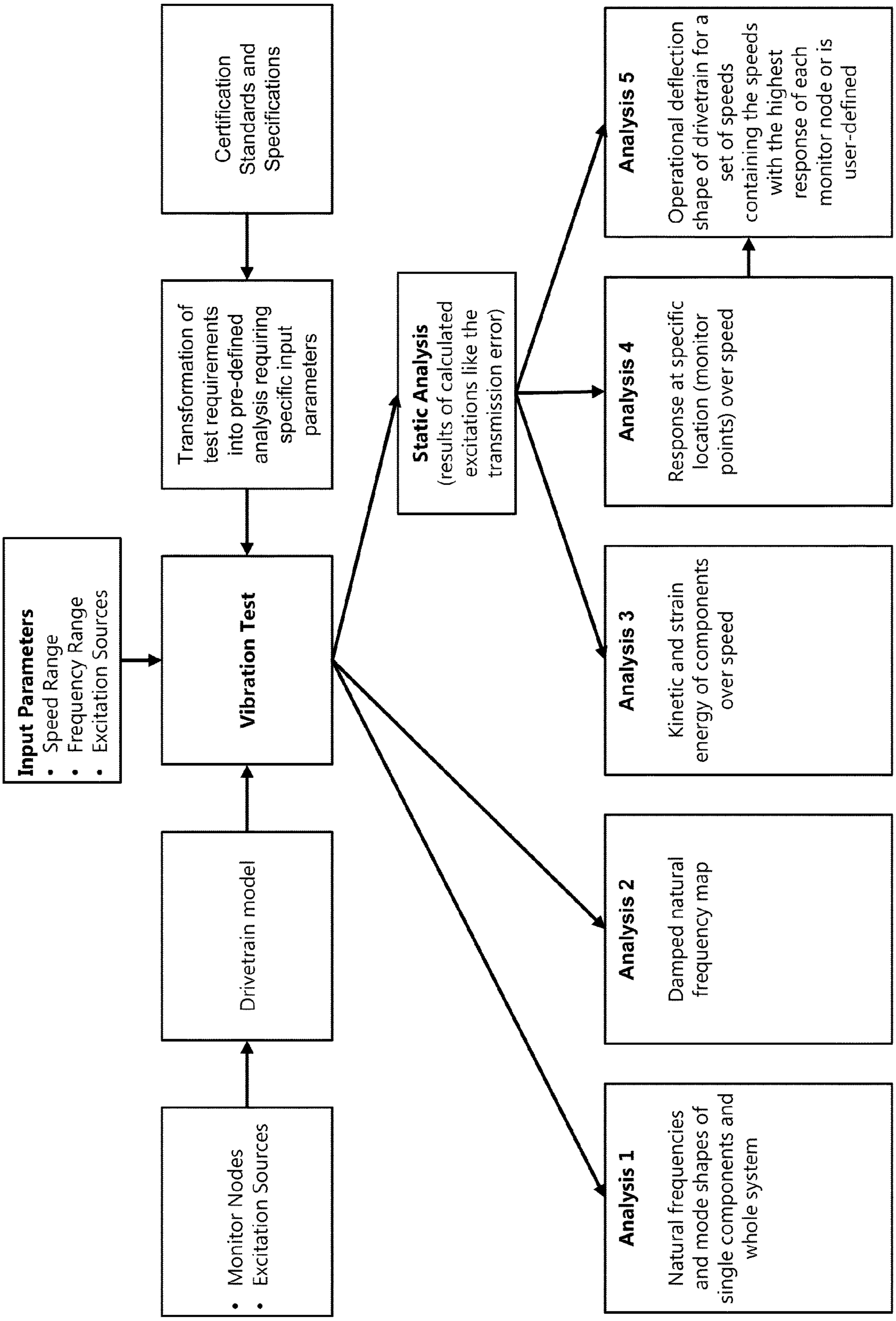

Monitor Nodes
Excitation Sources
Drivetrain model
Input Parameters
Speed Range
Frequency Range
Excitation Sources
Vibration Test
Transformation of test requirements into pre-defined analysis requiring specific input parameters
Certification Standards and Specifications
Static Analysis
(results of calculated excitations like the transmission error)
Analysis 1
Natural frequencies and mode shapes of single components and whole system
Analysis 2
Damped natural frequency map
Analysis 3
Kinetic and strain energy of components over speed
Analysis 4
Response at specific location (monitor points) over speed
Analysis 5
Operational deflection shape of drivetrain for a set of speeds containing the speeds with the highest response of each monitor node or is user-defined

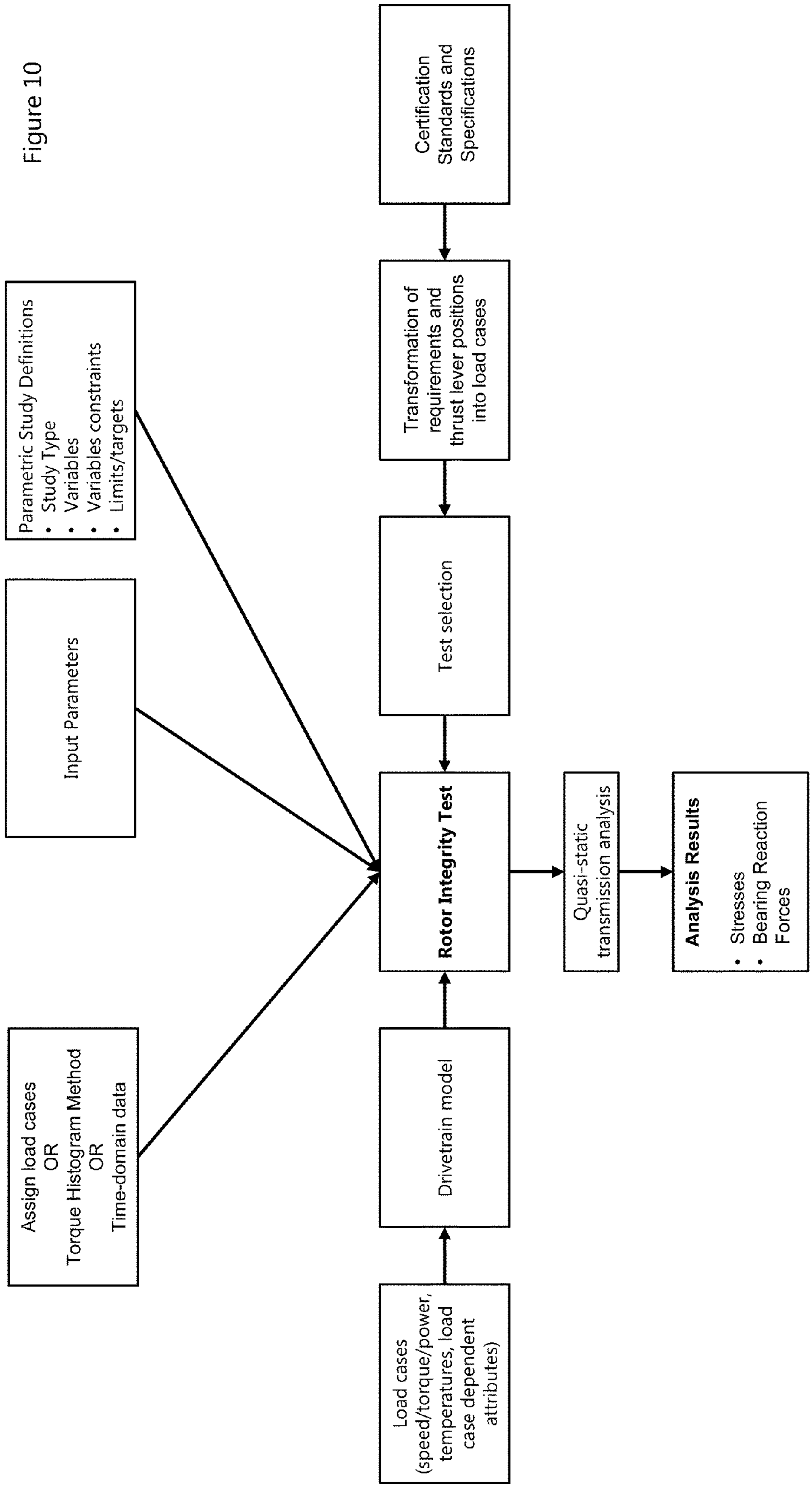
Certification Standards and Specifications
Transformation of requirements and thrust lever positions into load cases
Test selection
Parametric Study Definitions
• Study Type
• Variables
• Variables constraints
• Limits/targets
Input Parameters
Assign load cases OR Torque Histogram Method OR Time-domain data
Rotor Integrity Test
Quasi-static transmission analysis
Analysis Results
• Stresses
• Bearing Reaction Forces
Drivetrain model
Load cases (speed/torque/power, temperatures, load case dependent attributes)

Figure 10

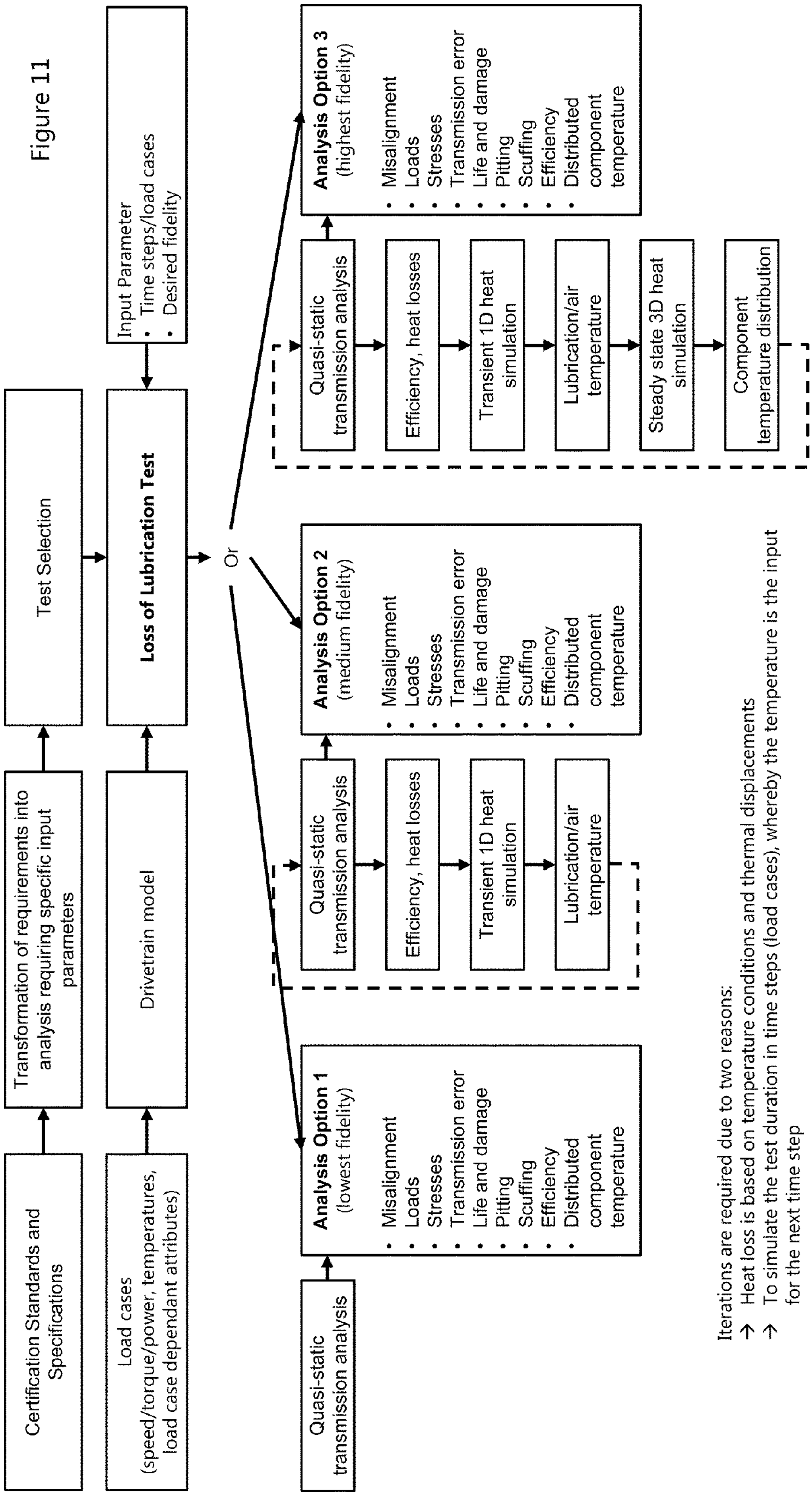
Certification Standards and Specifications
Transformation of requirements into analysis requiring specific input parameters
Test Selection
Load cases (speed/torque/power, temperatures, load case dependant attributes)
Drivetrain model
Loss of Lubrication Test
Input Parameter
• Time steps/load cases
• Desired fidelity
Or
Quasi-static transmission analysis
Analysis Option 1 (lowest fidelity)
• Misalignment
• Loads
• Stresses
• Transmission error
• Life and damage
• Pitting
• Scuffing
• Efficiency
• Distributed component temperature
Quasi-static transmission analysis
Efficiency, heat losses
Transient 1D heat simulation
Lubrication/air temperature
Analysis Option 2 (medium fidelity)
• Misalignment
• Loads
• Stresses
• Transmission error
• Life and damage
• Pitting
• Scuffing
• Efficiency
• Distributed component temperature
Quasi-static transmission analysis
Efficiency, heat losses
Transient 1D heat simulation
Lubrication/air temperature
Steady state 3D heat simulation
Component temperature distribution
Analysis Option 3 (highest fidelity)
• Misalignment
• Loads
• Stresses
• Transmission error
• Life and damage
• Pitting
• Scuffing
• Efficiency
• Distributed component temperature
Iterations are required due to two reasons:
→ Heat loss is based on temperature conditions and thermal displacements
→ To simulate the test duration in time steps (load cases), whereby the temperature is the input for the next time step
Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2506532 A